# EUROPEAN PATENT APPLICATION

(11) **EP 4 576 752 A2**
(43) Date of publication of application: **25.06.2025**
(21) Application number: 24212098.8
(22) Date of filing: 11.11.2024
(51) Int. Cl.: H04M 1/72412, G06F 3/16, H04M 1/60, H04W 4/80

(54) **METHODS AND DEVICES TO PERFORM SHORT-RANGE WIRELESS COMMUNICATION**

(30) Priority: 21.12.2023 US 202318391738
(71) Applicant: Intel Corporation, Santa Clara, CA 95054 (US)
(72) Inventor: DEVEGOWDA, Chandrashekar, 571403 Bangalore (IN); PETIT, Barath Christopher, 560077 Bangalore (IN); KROVVIDI, Srinivas, 500090 Hyderabad (IN); AGARWAL, Anshu, 560037 Bangalore (IN); R, Rahul, 683102 Aluva (IN); KAMADOLLI, Karunakar, Bangalore (IN); CHAKRABORTY, Suranjan, 560035 Bangalore (IN); CHANDEL, Amit Singh, 560066 Bangalore (IN); MANOHAR, Naveen, Bangalore (IN); RATHI, Ashwini, 250625 Tikri (IN); HEDGE, Mythili, Bangalore (IN); GUPTA, Sagar, Ghaziabad (IN); GUPTA, Jay Vishnu, Bengaluru (IN); PATTANAIK, Vatsala, 560066 Bangalore (IN); JAGADISH, Arun, 560052 Bangalore (IN); CHOUDHURY, Deepika, Bengaluru (IN); HIREGOUDAR, Vijayakumar, 560100 Bangalore (IN); KUMARAPPAN, Jayakumar, 560068 Bangalore (IN); BHASIN, Sheetal, 560048 Bangalore (IN); THAKUR, Jayprakash, 560035 Bangalore (IN)
(74) Representative: Viering, Jentschura & Partner mbB Patent- und Rechtsanwälte

(57) **Abstract**

An apparatus of a communication device, the apparatus may include a first interface configured to stream first audio data via an established link, wherein the established link is between the communication device and a further communication device; a second interface configured to receive second audio data from an audio input device; and a processor configured to: monitor, during a streaming of the first audio data via the established link, the second audio data; and determine a result representing whether the second audio data comprises information representative of a presence of an auditory interruption.

## Description

### Technical Field

This disclosure generally relates to methods and apparatus to perform short-range wireless communication.

### Background

Many wireless communication technologies, in particular, short-range wireless communication technologies (e.g. Bluetooth, Wi-Fi Direct) may allow communication between primary devices and secondary devices using established short-range wireless communication links. In this context, many communication devices are configured to interact with their users through various interfaces. In consideration of various use cases for a device that is capable communication via short-range wireless communication technologies, it may be desirable to increase connectivity and quality of experience (QoE) of short-range wireless communication devices.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an exemplary radio communication network;
FIG. 2 shows an exemplary internal configuration of a communication device;
FIG. 3 shows an exemplary illustration of a network environment;
FIG. 4 shows an exemplary illustration of a network topology that communication devices may use;
FIG. 5 shows an illustrative example of a communication device;
FIG. 6 shows schematically an example of a block diagram to obtain encoded audio data for a transmission via an established link by the communication device 500;
FIG. 7 shows an illustrative example of a flow diagram which a processor may perform;
FIG. 8 shows an illustrative example of an audio environment;
FIG. 9 shows an illustrative example of a flow diagram that the processor 501 may perform in accordance with various aspects provided herein;
FIG. 10 shows an illustrative example of the multi-classification machine learning model;
FIG. 11A shows an example of a graph;
FIG. 11B shows an example of a graph;
FIG. 11C shows an illustrative example including a messaging flow between the communication device 500 and the devices of the BLE device pair;
FIG. 12 shows an illustrative example of a software flow that the processor 501 may perform;
FIG. 13 shows an example of a method.
FIG. 14 shows an example of a method.
FIG. 15 shows an example of a method.
FIG. 16 shows an example of a method;
FIG. 17 shows an illustrative example of a processor and a memory.

### Description

The following detailed description refers to the accompanying drawings that show, by way of illustration, exemplary details and aspects in which aspects of the present disclosure may be practiced.

Short-range wireless communication networks like Bluetooth, WLAN, etc. may often face connection problems, causing disruptions in calls when users move around indoors. These interruptions may happen because of signal interference from other devices, physical barriers like walls, or electromagnetic interference from nearby electronics. The signal strength also may also vary as users move, leading to unstable connections that affect the user experience negatively.

Solving these issues traditionally involves using better technology to handle signal problems, improving antenna designs for wider coverage, and managing how frequencies are used, and the like. It may also be considered important to explore ways to adjust how devices send signals to keep connections stable, especially when users are moving around a lot. Collaboration between device makers, network experts, and standard-setting groups is key to creating stronger solutions for these common connection problems in short-range wireless networks.

As used herein, "communication device" (e.g. a radio communication device) may refer to any type of electronic devices that are able to exchange information with at least another device, for example according to various types of radio communication technologies and using various types of communication protocols as exemplarily provided herein. Exemplarily, a communication device may be, or may include, an access point, a station, any types of user devices which may include a suitable device including a processor, that may include, a mobile device or a non-mobile device, a user equipment (UE), a computing device, such as a personal computer (PC), a desktop computer, a mobile computer, a laptop computer, a notebook computer, a tablet computer, a server, a handheld computing device, a wearable device, such as a smart bracelet, a smart watch, smart glasses, a smart ring, etc., an internet of things (IoT) device, a sensor, a mobile phone, a cellular telephone, any types of wireless accessories, such as a headphone, a headset, a microphone, a speaker, a domotics (smart home) device, a docking station, a medical device, an endoscope, a surgical robot, a hearing aid, a cochlear implant device or a system, a Bluetooth medical device, an audio communication device, a headset, a headphone, an earphone, an earbud, a true wireless earphone, a wireless speaker, an in-vehicle device, or a device for vehicles, etc.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth^{®}, Wireless Gigabit Alliance ("WiGig") standard, mmWave standards in general (wireless systems operating at 10-300 GHz and above such as WiGig, IEEE 802.1 1ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("12V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz-71 GHz band, any band between 65.88 GHz and 71 GHz, bands currently allocated to automotive radar applications such as 76-81 GHz, and future bands including 94-300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies including Wireless Personal Area Network (WPAN) standards (e.g., according to any IEEE 802.15 standard), Wi-Fi Direct, Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Bluetooth (BT) technology may use frequencies between 2.402 and 2.480 GHz, or 2.400 and 2.4835 GHz including guard bands 2 MHz wide at the bottom end and 3.5 MHz wide at the top, according to frequency-hopping spread spectrum. A communication device operating according to a Bluetooth protocol may divide data to be transmitted into packets and transmit each packet into a channel designated for the use (e.g. of bandwidth of 1 MHz for classic Bluetooth and 2 MHz for Bluetooth Low Energy (BLE)). A communication device configured to operate according to a Bluetooth protocol may operate in a basic rate (BR) mode using a Gaussian frequency-shift keying (GFSK) modulation, and/or operate in an enhanced data rate (EDR) mode, that is considered to provide a faster data rate and lower power consumption, using a differential phase-shift keying (DPSK) (e.g. 8-DPSK) and/or differential quadrature phase-shift keying (DQPSK) (e.g. π/4-DQPSK) based on the quality of the communication channel. A communication device configured to operate according to a Bluetooth protocol may operate according to the Bluetooth Low Energy (BLE) technology that is integrated within the Bluetooth standard starting from v4.0, which operates within the same frequency spectrum, using GFSK modulation.

Wi-Fi Direct technology, which may also be referred to as Wi-Fi P2P, may be one of the exemplary technologies used with respect to peer-to-peer connections provided in this disclosure. Peer-to-peer connections may refer to point-to-point connections between two communication devices according to a peer-to-peer communication protocol. Within a peer-to-peer network, communication devices (two or more) may communicate with each other over the P2P connections established between them. A Wi-Fi Direct connection may allow communication devices to communicate over an established Wi-Fi Direct connection without an intermediary entity such as an access point or a router. Wi-Fi Direct technology allows for forming a P2P network by forming a P2P group in which a communication device may take the role of a Group Owner (GO) or a Group Client (GC).

In accordance with various aspects of this disclosure, a communication device may communicate with at least one further communication device. In some aspects, a short-range wireless communication device may communicate with at least one further short-range wireless communication device over an established short-range wireless communication link. The short-range wireless communication device may have connections that are established with multiple short-range wireless communication devices simultaneously. Various aspects provided herein may include examples in which short-range wireless communication is Bluetooth (BT) communication and accordingly in respective aspects, a short-range wireless connection may include BT connections. Operations may include BT communication in a BR/EDR mode or in a BLE mode.

In some aspects, methods and apparatus may employ channel hopping mechanisms with an intention to reduce interference and fading by using a number of frequency hopping spread spectrum carriers. In those aspects, connected communication devices may communicate with each other according to a determined channel hopping pattern. In existing channel hopping mechanisms, one of the communication devices may determine the channel hopping patterns randomly (e.g. frequency hopping in BT), or pseudo-randomly based on certain considerations (e.g. adaptive frequency hopping in BT). It may be desirable for the respective communication device to determine a channel hopping pattern to be used with another communication device according to a designated scheduling mechanism by scheduling channels having better quality more frequently.

In some aspects, methods and apparatus may employ various configuration mechanisms associated with established synchronous links in BT, particularly for audio connections in some examples, with an intention to reduce power consumption and use of the allocated spectrum efficiently, which may further reduce interference for other BT devices within the same environment.

In some aspects, methods and apparatus may employ various accessibility mechanisms with the intention to improve accessibility of a computing device for visually impaired users. It may be desirable for a computing device to operate in a designated mode with an improved accessibility over an established interface between a designated input device and applications, and in some aspects in designated low power operation modes with an intention to conserve power.

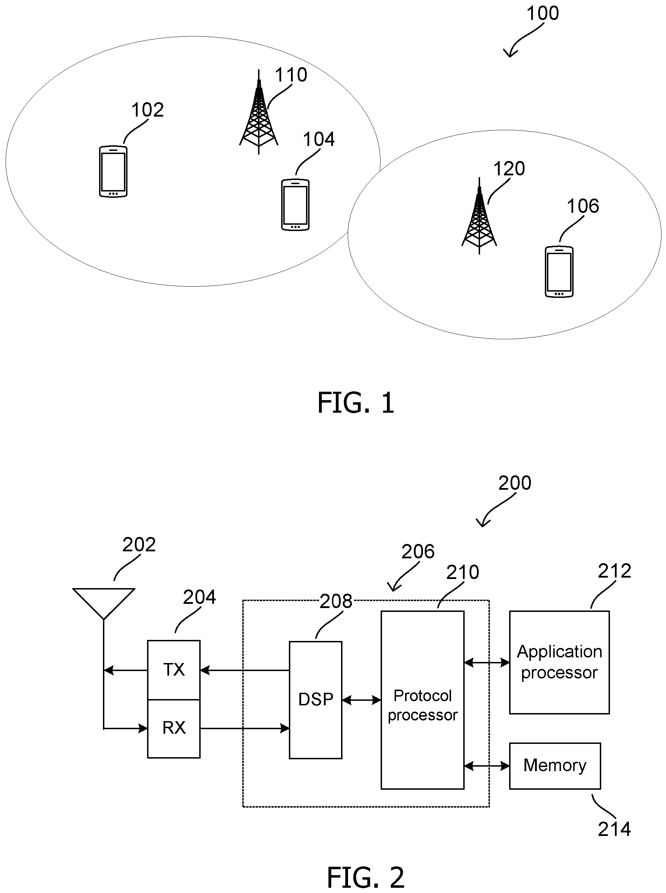

FIGs. 1 and 2 depict a general network and device architecture for wireless communications. In particular, FIG. 1 shows exemplary radio communication network 100 according to some aspects, which may include communication devices depicted as terminal devices 102, 104, and 106 and communication devices depicted as network access node 110. Radio communication network 100 may communicate with terminal devices 102 and 104 via network access node 110 over a radio access network. Although certain examples described herein may refer to a particular radio access network context (e.g., LTE, UMTS, GSM, other 3rd Generation Partnership Project (3GPP) networks, WLAN/WiFi, Bluetooth, 5GNR, mmWave, etc.), these examples are demonstrative and may therefore be readily applied to any other type or configuration of radio access network. In various examples, terminal devices 102 and 104 may communicate with each other without involvement of the radio access network, such as over a peer-to-peer network.

In an exemplary cellular context, network access node 110 may be base stations (e.g., eNodeBs, NodeBs, Base Transceiver Stations (BTSs), gNodeBs, or any other type of base station), while terminal devices 102, 104 and 106 may be cellular terminal devices (e.g., Mobile Stations (MSs), User Equipments (UEs), or any type of cellular terminal device). Network access node 110 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. Terminal devices 102 and 104 may exemplarily be terminal devices within the same vicinity (in proximity). The cellular core network may interface with one or more external data networks. In an exemplary short-range wireless context other than BT, network access node 110 and 120 may be access points (APs, e.g., WLAN or WiFi APs), while terminal device 102 and 104 may be short range terminal devices (e.g., stations (STAs)). Network access node 110 may interface (e.g., via an internal or external router) with one or more external data networks. Network access node 110 and terminal devices 102 and 104 may include one or multiple transmission/reception points (TRPs). In an exemplary BT network, network access node 110 and 120 may be a primary device of the BT network (e.g. piconet) and terminal devices 102 and 104 may be a secondary device of the BT network.

Network access node 110 (and, optionally, other network access nodes of radio communication network 100 not explicitly shown in FIG. 1) may accordingly provide a radio access network to terminal devices 102, 104, and 106 (and, optionally, other terminal devices of radio communication network 100 not explicitly shown in FIG. 1). In an exemplary cellular context, the radio access network provided by network access node 110 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access node 110 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access node 110 may follow the defined communication protocols to transmit and receive data over the radio access network domain of radio communication network 100, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network 100.

FIG. 2 shows an exemplary internal configuration of a communication device. The communication device may include a terminal device 102 according to some aspects, and it will be referred to as terminal device 102, but the communication device may also include various aspects of network access nodes 110, 120 as well. The terminal device 102 may include antenna system 202, radio frequency (RF) transceiver 204, baseband modem 206 (including digital signal processor 208 and protocol controller 210), application processor 212, and memory 214. Although not explicitly shown in FIG. 2, in some aspects terminal device 102 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Terminal device 102 may transmit and receive radio signals on one or more radio access networks. Baseband modem 206 may direct such communication functionality of terminal device 102 according to the communication protocols associated with each radio access network and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of terminal device 102 shown in FIG. 2 depicts only a single instance of such components.

Terminal device 102 may transmit and receive wireless signals with antenna system 202. Antenna system 202 may be a single antenna or may include one or more antenna arrays that each include multiple antenna elements. For example, antenna system 202 may include an antenna array at the top of terminal device 102 and a second antenna array at the bottom of terminal device 102. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Terminal device 102 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of terminal device 102 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology.

Protocol controller 210 may be structurally embodied as a protocol processor configured to execute protocol stack software (retrieved from a controller memory) and subsequently control the radio communication components of terminal device 102 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio terminal device 102 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Illustratively, in cellular context, the protocol processor 210 may perform protocol stack functions of a cellular protocol stack (e.g. LTE, NR, 6G, etc.). In wireless local area network (WLAN) context, the protocol processor 210 may perform protocol stack functions of an IEEE 802.11 communication protocol stack in accordance with any known version of the protocol. In BT context, the protocol processor 210 may perform protocol stack functions of a BT communication protocol.

Terminal device 102 may also include application processor 212 and memory 214. Application processor 212 may be a CPU and may be configured to handle the layers above the protocol stack, including the transport and application layers. Application processor 212 may be configured to execute various applications and/or programs of terminal device 102 at an application layer of terminal device 102, such as an operating system (OS), a user interface (UI) for supporting user interaction with terminal device 102, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of terminal device 102, such as a hard drive or another such permanent memory device. Although not explicitly depicted in FIG. 2, the various other components of terminal device 102 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112.

Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

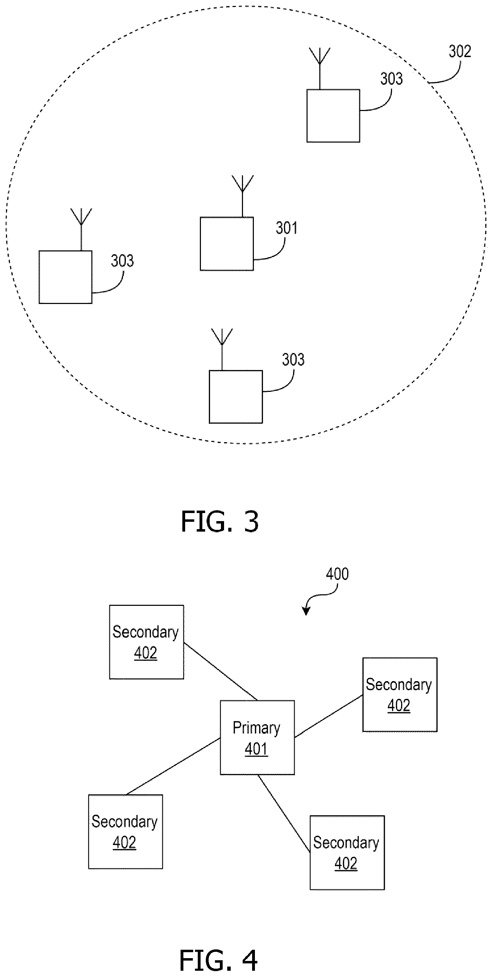

FIG. 3 shows an exemplary illustration of a network environment including various types of communication devices in accordance with various aspects of this disclosure. The network environment is depicted as an example of a BT network including BT devices configured to communicate with BT signals using BT links established in-between. The network 300 may include a BT device 301 that is communicatively couplable to various types of communication devices 303 within a coverage area 302 using BT technology. In various examples, the BT device 301 may communicate with further BT devices 303 using BT communication. In this illustrative example, the BT device 301 may be configured to operate as a primary BT device, and further BT devices 303 may be configured to operate as a secondary BT device.

In accordance with various aspects provided herein, the BT technology may include BR/EDR (Basic Rate/Enhanced Data Rate) BT, or BLE (Low Energy). Accordingly, BT devices 301, 303 depicted herein may include at least one BT controller that is configured to perform operations according to BR/EDR BT and/or BLE.

In accordance with the BR/EDR BT technology, BT devices 301, 303 within the network 300 may share a physical communication channel that is shared. The primary BT device (i.e. the BT device 301) may synchronize the secondary BT devices (i.e. further BT devices 303) with a synchronization reference (a common clock and frequency hopping pattern). The primary BT device and the secondary BT devices may perform communication operations according to the synchronization reference (e.g. according to common clock and frequency hopping pattern provided by the primary BT device). The physical communication channel is divided into time slots, and BT devices 301, 303 may transmit and/or receive BT signals using time-division duplex (TDD) operation.

In accordance with the BLE technology, the primary BT device (i.e. the BT device 301, "initiator") may monitor and receive advertising packets from the secondary BT devices (i.e. the BT devices 303) within the network 300, and, in response to advertisement operations, initiate connection events (exchange of data) over the established physical channel. The primary BT device may provide the frequency hopping pattern to be used for the established connection.

In these technologies, a physical link may be formed between the primary BT device and a secondary BT device for each secondary BT device to facilitate the exchange of data between the primary BT device and the respective secondary BT device. Each physical link may be used by the primary BT device or the respective secondary BT device as a transport for one or more logical links in-between the BT devices respectively. At a receive operation from a BT device, data traffic on a physical link may be demultiplexed to the one or more logical links, and at a transmit operation to a BT device, data traffic on one or more logical links may be multiplexed to the physical link.

A BT device may provide functions to control and manage aspects associated with baseband operations and physical layer operations at a link layer, that is associated with the one or more logical links. The BR/EDR BT device may perform link manager protocol (LMP) functions (i.e. the link manager function) within the protocol stack, that may use an asynchronous connection-oriented logical transport (i.e. ACL) via LMP protocol signaling. Furthermore, the BR/EDR BT device may perform functions to process synchronous data streams. Similarly, the BLE device may perform link layer protocol (LLP) functions (i.e. the link layer functions) within the protocol stack, that may use an LE asynchronous connection logical transport (i.e. LE ACL). Both BR/EDR BT and BLE may further include logical layer control and adaptation protocol (L2CAP) functions including channel-based abstraction for application layer, segmentation, and reassembly of application data, and multiplexing and demultiplexing of multiple channels over a shared logical link, etc.

A BT device may further include additional protocols that are interoperable with the BR/EDR and/or LE technologies based on the capabilities of the respective BT device and its intended use. Additional protocols may include various predefined BT profiles (i.e. services, functions) supported by the BT technology, some of which may reside in a layer that is above the layers of the protocol stack mentioned above. For each profile, BT devices performing communication based on a profile may be configured to perform various functions of the respective profile to exchange data associated with the respective profile.

For example, in accordance with various aspects provided herein, a BT device may be configured to perform advanced audio distribution profile (A2DP) functions based on defined A2DP operations (e.g. Advanced Audio Distribution Profile - Bluetooth^{®} Profile Specification, v1.4, 2022-06-21). The A2DP may include various functions associated with streaming (i.e. transferring) audio data from one BT device to another BT device over a BT connection. In accordance with various aspects provided herein, a BT device may perform A2DP functions to receive and/or decode and/or send and/or encode audio data. The A2DP functions may include controlling the processing of audio data based on predefined audio decoding and encoding operations, such as low-complexity subband codec (SBC), MPEG-1, MPEG-2, and MPEG-4, etc.

A2DP functions may be based on functions of further defined protocols (e.g. Audio/Video Distribution Transport Protocol (AVDTP; Audio/Video Distribution Transport Protocol Specification, Bluetooth^{®} Specification, v.13, 2012-07-24), and/or Generic Audio/Video Distribution Profile (GAVDP; Generic Audio/Video Distribution Profile Specification, Bluetooth^{®} Specification, v.13, 2012-07-24)) for distribution of the audio data. In various examples, a BT device may perform AVDTP functions or GAVDP functions to receive and/or decode and/or send and/or encode audio data. A BT device configured to perform functions by which the BT device assumes a designated role to perform functions to decode/encode audio data. A BT device may be configured to operate as a source device, that encodes digital audio data stream to provide the encoded audio data to a sink device of a network. A BT device may be configured to operate as a sink device, that receives encoded digital audio data stream from a source device of a network.

For example, in accordance with various aspects provided herein, a BT device may be configured to perform audio/video remote control profile (AVRCP) functions based on defined AVRCP operations (e.g. Audio/Video Remote Control - Bluetooth^{®} Profile Specification, v1.6.2, 2019-01-21). The AVCRP may include various functions associated with controlling audio/video functions of a BT device by another BT device over a BT connection. In accordance with various aspects provided herein, a BT device may perform AVCRP functions to receive and/or decode and/or send and/or encode messages including information about audio/video operations and control of the audio/video operations. In various examples, such operations may include providing messages that may cause the BT device to display information and receive user interactions.

AVRCP functions may be based on functions of further defined protocols (e.g. Audio/Video Control Transport Protocol (AVCTP; Audio/Video Control Transport Protocol Specification - Bluetooth^{®} Profile Specification, V14, 2012-07-24)) for controlling audio and/or video operations of a BT device. In various examples, a BT device may be configured to perform AVCTP functions to control audio and/or video operations of another BT device via a BT connection.

For example, in accordance with various aspects provided herein, a BT device may be configured to perform headset profile (HSP) functions based on defined HSP operations (i.e. Headset Profile - Bluetooth^{®} Profile Specification, v12r00, 2008-12-18) or hands-free profile (HFP) functions based on defined HFP operations (i.e. Hands-Free Profile - Bluetooth^{®} Profile Specification; v1.8, 2020-0414). The HSP or HFP may include various functions associated with controlling audio/video functions particularly related to a headset or hands-free operations of a BT device by another BT device over a BT connection. In accordance with various aspects provided herein, a BT device may perform HSP or HFP functions to receive and/or decode and/or send and/or encode messages including information about headset or hands-free operations. In various examples, such operations may include providing messages including information about calls and voice related data transfer.

HSP or HFP functions may be based on functions of further defined protocols. Furthermore, functions according to A2DP, AVCTP, GAVDP, AVCRP may include operations based on asynchronous connection-oriented logical transport (ACL) communication links. A BT device that may perform HSP and/or HFP functions may be configured to operate using synchronous connection-oriented (SCO) and/or enhanced synchronous connection-oriented (e-SCO) communication links.

A BT device may be configured to communicate using ACL links or SCO links (including e-SCO links unless indicated otherwise). An ACL link may be a packet oriented link, generally used for data traffic between BT devices in which data integrity is desired. An SCO link may include radio links that are generally used for time-critical data communication, such as voice data. To avoid any misunderstanding, a BT device may be configured to operate according to any one or any combination of the profiles mentioned herein using communication links as supported for the profiles respectively. For example, it is common for a BT headset to be configured to operate by performing A2DP, AVCRP, HSP, and HFP functions. Dependencies and positions in the protocol stack associated with each above-mentioned profiles may vary due to flexibility of Bluetooth specification to support various use cases.

In various aspects provided herein, in particular within the context of communication between BT BLE Device, the respective BT BLE Devices may stream audio data via one or more isochronous connections using an isochronous physical channel. BT BLE Devices may transfer isochronous audio data in-between using a logical transport. Such streams may be referred to as a Connected Isochronous Stream (CIS). In accordance with various aspects, the CIS may be used to stream audio. In various examples, the communication link may be the logical link transporting the CIS between BT BLE devices.

In various examples, the BT device 301 may communicate with multiple further BT devices 303 within the BT network over established communication links between BT devices that are maintained simultaneously in the network 300. For example, the BT device 301 may be communicatively coupled to each of further BT devices 303 over established connections.

Establishing a BT connection between BT devices may be realized once the BT devices are aware of each other. The primary device may receive an indication of a communication device with the response, which the primary device may use to establish a connection using an identifier of a secondary device. BT devices may store identifiers of other BT devices in their respective memories. BT technology supports pairing, in which two communication devices that are paired with each other may establish a connection with each other. For this purpose, BT devices may exchange a previously defined passphrase (e.g. passkey, password, personal identification number (PIN) that may be designated by the end of the inquiry) to establish a previously paired connection between devices to provide a secure connection.

Once the devices have the necessary information (e.g. identifiers, passphrase, clock, etc.) obtained through an inquiry phase to establish connections, the primary device may initiate a paging procedure, in which the primary device may transmit radio communication signals that are encoded based on the obtained information with respect to the secondary device. In response to a series of exchanged messages according to the paging procedure, which may include the identifier of the secondary device, a connection may be established between the primary device and the secondary device.

The state representing the presence of an established connection between devices may be referred to as a connection state. When devices are in a connection state, the respective BT devices may have an established connection in-between, via which can send or receive information (e.g. BT packets). The exchanged information may include control information (e.g. control messages) or user data (e.g. audio data).

In accordance with various aspects, for a BT device, the period of times in which a BT device may operate in a low-power mode and in a mode that performs communication operations including transmitting or sending data, or listening to a communication channel may be defined with duty-cycles, defining when a BT device may go into a low-power mode, and when a BT device may perform communication operations.

A connection state of a BT device may include a sniff mode. In accordance with various aspects provided herein, a low-power mode may include a sniff mode. In a sniff mode, a BT device may operate with a duty cycle that is lower than the duty cycle of the active mode. For example, a secondary device operating in an active mode may listen to the communication channel in every ACL slot, while the secondary device operating in a sniff mode may reduce the period of listening to the communication channel and listen only in predefined time slots. A respective primary device may also configure communications to the secondary device accordingly to communicate with the secondary device only in the predefined time slots.

In accordance with various aspects provided herein, a low-power mode may include a subrating mode (e.g. sniff subrating or subrated connection). A BT device, in particular a BT BLE device, may operate with a subrating mode, in which the duty cycle associated with the BT communication is reduced based on a subrating parameters. For example, subrating parameters may include a subrating factor representing the reduction of the duty cycle. For example, a subrating factor N (e.g. N=4) represents that the BT device may be configured to communicate with (only) every Nth (e.g. 4^{th}) communication event of communication events designated for the respective BT device. The BT device may implement the subrating mode via a subrated connection (e.g. in active mode), or in a sniff mode.

In accordance with various aspects of this disclosure, communication devices may exchange data in various modes. As indicated before, BT communication may support a mode in which asynchronous connection-less (ACL) protocol is used. The ACL protocol may include exchanging data frames between communication devices over an established communication, in which the data frames are designated for the purpose of exchanging data. ACL protocol may support retransmissions. BT communication may further support a mode in which a synchronous connection-oriented (SCO) protocol is used. SCO protocol may, in particular, be suitable for exchanging real-time information such as audio or video data. In SCO, retransmissions are not used, but forward error correction may be supported.

BT devices 301, 303 within the network may include various circuits and components configured to receive and transmit communication signals. In various examples, BT devices 301, 303 within the network 300 may communicate according to BT technology performing operations according to BT protocol using one or more antennas 304, 305. The BT devices 301, 303 may further communicate according to further communication protocols as well. It is depicted in this example that each antenna 304, 305 as a single antenna but this may not be limiting. BT devices 301, 303 may include further antennas that are designated to be used for further radio communication technologies that a respective BT device may operate.

A multipoint BT device, as a type of a secondary device, may maintain more than one BT connection that are established with more than one further BT devices. The multipoint BT device may receive audio data stream from a first BT device over a communication link between the multipoint BT device and the first BT device, while exchanging information with further BT devices over communication links between the multipoint BT device and the further BT devices respectively, for example, by using the communication channel according to a TDD scheme.

FIG. 4 shows an exemplary illustration of a network topology that communication devices may use. Communication devices may be configured to communicate within a network 400 (e.g. piconet for BT networks). Each communication device may undertake various roles within the network. For example, a communication device may operate as a primary device 401 (e.g. master device, central device) or a secondary device 402 (e.g. slave device, peripheral device). A primary device 401 may be a communication device that may initiate a connection request to another communication device that advertises its presence. A secondary device 402 may be a communication device that receives a connection request from a primary device 401.

Each secondary device 402 may be communicatively coupled to the primary device over an established connection, collectively forming the network 400. The primary device 401 may coordinate communication through the network 400. It may be possible for the primary device 401 and the secondary devices 402 to change the roles in-between, such that the primary device 401 may become a secondary device and one of the secondary devices 402 may become a primary device in the network 400 in various examples. In various examples, the primary device 401 may establish and maintain an order and a polling scheme, including designating time slots for the secondary devices 402. The number of secondary devices 402 in the network may vary. Furthermore, the network 400 may be communicatively coupled to another network over at least one of the devices resulting in a scatternet for BT devices. In a scatternet, a device that may be a primary device or a secondary device for one network, may act as a secondary device for another network. In such cases, the device may employ time multiplexing to transmit/send radio communication signals to multiple networks.

In some examples, devices of the network 400 may employ a channel-hopping mechanism (or frequency-hopping mechanism). In a channel-hopping mechanism, available radio resources are divided in multiple radio communication channels (e.g. RF channels or sub-bands), and the transmitting entity and the receiving entity (or entities) may change (i.e. "hop") the carrier frequency in time among many distinct RF channels from the multiple RF channels according to a predetermined order (e.g. "a hop pattern" or a "hop sequence"). Accordingly, even if there is a transmission via an RF channel having considerable interference, the effect of the interference may be limited due to limited use of that particular channel. This mechanism may also be referred to as frequency-hopping spread spectrum.

The communicating entities (i.e. transmitting entity and receiving entity) may have the knowledge of the predetermined order of the hopping, which may be referred to as a channel hopping sequence (or pattern) or a frequency hopping sequence (or pattern) in this disclosure. A channel hopping sequence may represent an allocation of multiple RF channels in multiple time slots. The channel hopping sequence may simply include information representing an order of RF channels to be used, and the respective communicating entity may accordingly change the RF channels based on the provided order according to a predefined time slot. In some examples, the channel hopping sequence may also include time information representing duration of time slots, or representing when the hop is to be performed.

In some aspects, methods and apparatus provided in this disclosure may be used to configure various operations that are applicable to BT devices, e.g. to communicate according to BT communication protocol. In BT communication, communication links (i.e. connections) are established between BT devices to transfer various types of data. In accordance with various aspects provided in this disclosure, a connection between the primary device 401 and the secondary device 402 may stream audio data. Commonly, the BT communication may stream audio data over established links. BT communication may support streaming of audio data over asynchronous connection oriented (ACL) links and synchronous connection oriented (SCO) links.

In duplex communication to stream audio data between BT devices, BT devices may exchange audio data via an established synchronous link (i.e. an SCO link or an eSCO link), in which the audio streams in both directions for the BT devices. An example implementation may be illustrated with a BT headset, as an example of a secondary device 402, including a microphone and a speaker. The BT headset may stream audio data based on audio input received from the microphone to stream the encoded audio data to another BT device (e.g. a computer), as an example of a primary device 401, while the BT headset may stream audio data from the another BT device to provide audio output from the speakers. In this illustrative example, the BT devices may use the SCO link to transport audio data between the BT devices. In this constellation, the another BT device may also stream audio data to the BT headset based on audio input and may stream audio data from the another BT device to provide an audio output (e.g. to a speaker).

An SCO link may be a logical transport that is symmetric and point-to-point between BT devices, such the primary device 402 and the secondary device 402, in particular, for BR/EDR BT. The SCO may reserve slots on physical channel to carry information synchronized with the clock. An eSCO link is referred to as an extended SCO link which, in addition to various BR/EDR operations of the SCO, may provide a support to combine packet types flexibly and may operate with selectable data contents in packets and selectable slot periods. Both SCO and eSCO are suitable to carry constant data rate streams.

In BT synchronous links, BT devices may communicate with each other via allocated slots referencing the synchronization clock. The primary device 402 may reserve primary-to-secondary slots in which the primary device 402 transmits BT communication signals, and the secondary device 401 may initialize on slots. The secondary-to-primary slots in which the secondary device 402 may transmit BT communication signals, may directly follow reserved primary-to-secondary slots. The primary device 401 sends SCO packets to the secondary device 402 in the reserved primary-to-secondary slots, and the secondary device 402 may send SCO packets to the primary device 401 in the reserved secondary-to-primary slots.

On the other hand, streaming audio data through Asynchronous Connectionless (ACL) links follows a distinct approach compared to Synchronous Connection Oriented (SCO) links. ACL links may prioritize flexibility over real-time synchronization, enabling the streaming of diverse data types, including audio. Unlike SCO links, which specialize in synchronous audio communication within reserved time slots, ACL links may stream data packets dynamically, adapting to available communication channels. This flexibility makes them suitable for non-real-time data transmission and supports streaming audio in a more adaptable manner.

In scenarios involving bidirectional audio communication between BT devices, ACL links may play a significant role. Illustratively, a BT headset, as a secondary device 402, may be equipped with a microphone and speakers. The BT headset may encode audio data based on input from its microphone and may decode received data to produce audio output through its speakers. This exchange may occur between the BT headset, serving as the secondary device 402, and another BT device, such as a computer, acting as the primary device 401. Unlike SCO links, which prioritize synchronized audio transmission, ACL links allow for more versatile data transfer. They enable a broader range of data exchanges beyond real-time audio streams, accommodating various types of information exchanges between BT devices. This adaptability in data transfer mechanisms allows BT devices to engage in diverse communication tasks beyond purely audio-focused exchanges.

When audio data streams through ACL links between BT devices, it includes packet-based transmission. The audio is segmented into packets and asynchronously transmitted between devices. These packets may encapsulate segments of audio information, enabling the streaming of discontinuous data, such as music tracks, voice snippets, or portions of audio files. Due to their asynchronous nature, ACL links may excel in handling various communication tasks beyond live audio streaming. They efficiently manage different data types, allowing for versatile streaming scenarios such as voice calls, file transfers, or messaging, providing BT devices with a flexible platform to stream audio and exchange information based on specific communication needs.

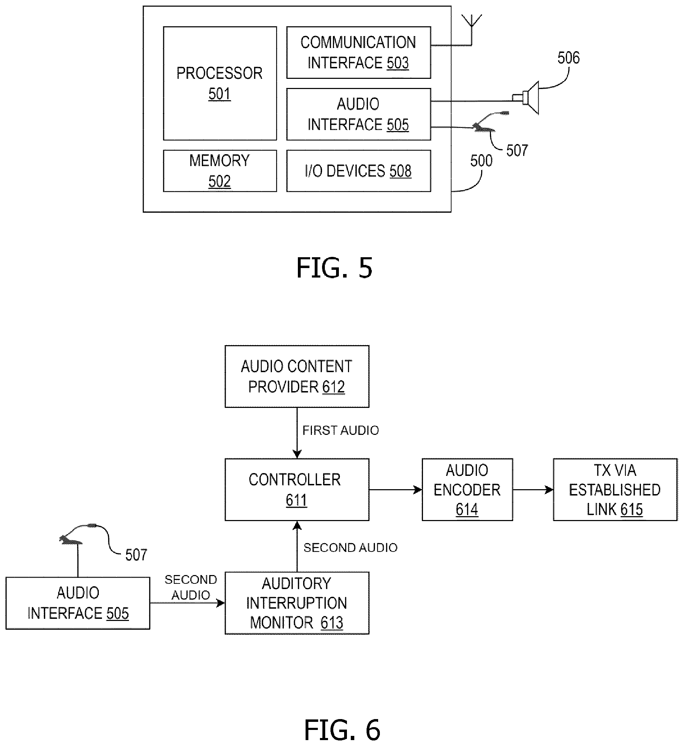

FIG. 5 shows an illustrative example of a communication device. The communication device 500 may include an apparatus including a processor 501. The processor 501 may include a central processing unit, a graphics processing unit, a hardware acceleration unit, a neuromorphic chip, and/or a controller. The processor 501 may be implemented in one processing unit, e.g. a system on chip (SOC), or an integrated system or chip. The processor 501 may include more than one processing unit configured to provide various aspects as mentioned herein. In various examples, the communication device 500 may be a communication device as described in this disclosure (e.g. BT device 301, 303), which may be acting as a primary device (e.g. the primary device 401) or as a secondary device (e.g. the secondary device 402). The processor 501 may be one or more processors of the communication device (e.g. application processor 212 and optionally protocol processor 210 and digital signal processor 208 as exemplarily provided with respect to FIG. 2).

The communication device 500 may further include a memory 502 to store data. The memory 502 may store an operating system (not shown) including instructions configured to manage various operations of the processor 501, the memory 502, and the communication interface 503, and may further manage operations of the communication device 500. The processor 501 and memory 502 (and also other various components of the apparatus) and other entities may be communicatively coupled over an internal interface to communicate with each other (e.g. a bus, wires, etc.).

The communication interface 503 may cause the communication device 500 to communicate with further communication devices configured for the same technology. The processor 501 may manage the communications with further communication devices for the communication device 500. The communication interface 503 various components, as exemplarily provided in accordance with FIG. 2, such as antenna system 202 including an antenna, radio frequency (RF) transceiver 204, baseband modem 206 (including digital signal processor 208 and protocol controller 210).

In various examples, the communication interface 503 may be configured to transmit and/or receive radio communication signals, via one or more antennas, according to BT communication protocol. The communication interface 503 may include a separate application processor, and memory, or in various examples, the processor 501 and the memory 502 may provide functions of an application processor and memory for communication purposes for the BT communication protocol. The communication interface 503 may further be configured to perform communications according to another communication protocol. Accordingly, the communication interface 503 may include multiple transceivers, each transceiver being configured to operate for a particular radio communication protocol.

In various examples in which the communication device 500 is a BT communication device, the processor 501 may perform BT host functions and BT controller functions of a BT protocol stack. The communication interface 503 may include a BT radio circuitry configured to transmit and/or receive BT radio communication signals. The processor 501 may execute and control execution of both BT host functions and BT controller functions within a BT protocol stack. BT host functions and BT controller functions include the essential operations for establishing and managing BT connections, handling protocols, and ensuring the smooth flow of data between interconnected BT devices. The communication interface 503 may transmit and receive BT radio communication signals, via a BT radio circuitry dedicated specifically to handle BT communication protocols.

The processor 501 may manage and oversee BT host functions and BT controller functions within its BT protocol stack. Illustratively, BT host functions may include the management of higher-level operations, such as establishing connections, authentication, encryption, and protocol handling. Through use of these functions, the BT communication device may provide seamless communication between BT-enabled devices, managing data transmission and reception. Meanwhile, BT controller functions may include the low-level functionalities responsible for managing radio frequencies, establishing links, and overseeing physical connections. These functions may optimize signal transmission, manage power consumption, and regulate the underlying hardware components for efficient Bluetooth connectivity.

The communication interface 503 may be configured to facilitate transmission and reception of radio communication signals adhering to the BT protocol via one or more antennas. The communication interface 503 may also include multiple transceivers, each configured for distinct radio communication protocols. This multifaceted setup may allow the BT communication device to engage not only in BT communication but also to adapt and communicate using other communication protocols as required.

In various examples, the communication interface 503 may be configured to transmit and/or receive radio communication signals, via one or more antennas, according to an IEEE 802.11 communication protocol. The communication interface 503 may include a separate application processor, and memory, or in various examples, the processor 501 and the memory 502 may provide functions of an application processor and memory for communication purposes for the IEEE 802.11 communication protocol. In various examples, communication interface 503 may be configured to transmit and/or receive radio communication signals via one or more antennas, according to a cellular communication technology, such as LTE, 5G/NR, 6G, etc.

In some examples, the communication circuitry 503 may be configured to transmit and/or receive radio communication signals of different radio access technologies. Illustratively, the communication interface 503 may include a WLAN unit for WLAN communication, a BT unit for BT communication, and a cellular communication unit for cellular communication, and one or more further units for one or more further radio technologies.

The communication device 500 may further include an audio interface 504. The audio interface 504 may be coupled to the processor 501 and/or the memory 502 and adapted to provide output as an electrical signal representation of an audible signal (i.e. audio signal) or receive electrical signals representing an audible signal. The audio interface 504 may be, or may include, any type of interface between a designated audio input (e.g. a microphone 507, an audio input port, etc.) and the processor 501; or any type of interface between a designated audio output (e.g. a loudspeaker 506, sound drivers, etc.) and the processor 501; in order to receive audio signal to process the audio signal at least for the purpose of converting the audio signal into audio data (e.g. encoding), or, to provide an audio signal as output after processing of audio data (e.g. decoding), respectively. In various examples, the audio interface 504 may simply include wires, conductors, resistors, connectors, etc. and it may further include further active elements, such as amplifiers, filters, etc. In various aspects, the audio interface 504 may include an audio input interface to receive an audio signal from an audio input device and/or may include an audio output interface to provide an audio signal to an audio output device.

In various aspects, the audio interface 504 may include an audio input interface to receive an audio signal from an audio input device and/or may include an audio output interface to provide an audio signal to an audio output device. The audio input device or the audio output device may be one of the I/O devices 508 or they may be external devices which the computing device 501 may communicate via the communication interface 503.

In some examples, the processor 501 may generate audio data to be transmitted to a further communication device. For example, the processor 501 may execute a software stored in the memory 502 (e.g. an audio player software, an audio streaming software, a teleconference call software, a gaming software, etc.) that provides audio data including a generated audio content to be transmitted to the further communication device. The processor 501 may encode the audio content to obtain the encoded audio data (i.e. audio stream). Illustratively, the executed software may cause the processor 501 to encode or format the audio content to generate pre-processed audio data. The processor 501 may, via its operating system functions, obtain the pre-processed audio data, and the processor 501 may further, via its BT host functions, encode the pre-processed audio data to obtain the encoded audio data.

The processor 501 may be configured to control the communication interface 503 to stream audio data over an established BT link, causing the communication interface 503 to receive BT communication signals from the further BT device and/or to transmit BT communication signals to the further BT device, in which the BT communication signals carry the audio data (i.e. encoded audio data). In a receive operation, the processor 501 may decode encoded audio data received from the further BT device to obtain audio data and/or an audio signal, which the processor 501 may provide the obtained audio signal to the audio interface 504. In a transmit operation, the processor 501 may encode i) audio signal and/or audio data received from the audio interface 504 and/or ii) encode generated pre-processed audio data into encoded audio data to transmit the audio data to the further BT device via the communication interface 503. The exchange of audio data between the BT device and the further BT device may be provided via data packets carrying the audio data.

The audio data may include data that is encoded according to various audio coding methods, and the processor 501 may be configured to perform audio coding/decoding methods to encode or decode audio data, such as continuously variable slope delta modulation (CVSD), low-complexity subband codec (SBC), MPEG-1, MPEG-2, MPEG-4, advance audio coding (AAC), etc. In particular, an established SCO link may carry audio data encoded with CVSD. The processor 501 may be configured to execute various instructions associated with various designated BT communication profiles, such as the headset profile, the hands-free profile, and the synchronous connection between BT devices may be referred to as audio connection.

The communication device 500 may further include one or more input and output (I/O) devices 508 that are communicatively coupled to the internal interface. It is depicted in the illustrative example that the communication device 500 includes I/O devices 508, however, this should not be taken as limiting, and the I/O devices 508 may be communicatively coupled to the communication device 500 via the communication interface 503 or via the audio interface 504 as illustrated for the microphone 507 and the loudspeaker 506. The BT device may include the I/O devices 508.

The I/O devices 508 may include various components and devices to provide input to the communication device 500, in particular for the processor 501 to process received input to associate it for various instructions. The I/O devices 508 may include input devices that are designated based on the use case of the BT device including the communication device 500. In some examples, the I/O devices 508 may include a button. The provided input may include, in particular, an input associated with an interaction of a user using the respective input device. Exemplarily, a mouse may be one of the I/O devices 508 configured to deliver user interactions by moving a pointer via hand movements or pressing keys or a keyboard may be one of the I/O devices 508 delivering user interactions by receiving keystrokes, or a touchpad may be one of the I/O devices 508 delivering user interactions by receiving touch inputs, etc.

The I/O devices 508 may be configured to provide an output based on instructions executed by the processor 501. The I/O devices 508 may include output devices that are designated depending on the use case of the communication device 500. The provided output may include, in particular, an output to present various types of information or indications for a user. For example, a display may be one of the I/O devices 508 configured to display visual information to the user in form of images, text, pictures, videos, etc.

It should be noted that an I/O device may be both an input device and an output device for the BT device including the communication device 500 within this context. For example, one of the input/output devices 508 may include a display configured to provide a visual output to a user. Furthermore, the display may include a touch screen display that is configured to receive input from the user interacting with the display. The contact interaction from the user may be detected by a touch input unit. The touch input unit may be configured to detect the interaction of the user with the display via a contact of the user. The touch input unit may be configured to detect contact and/or movement of the user (e.g. via a finger, via a stylus, etc.,) while touching the display. Alternatively, the touch input unit may be configured to detect the interaction of the user via another defined surface. For example, the touch input may include a touchpad that is configured to receive input from the user. Accordingly, such a display may be both an example of an input device and an output device.

Streaming audio from a communication device like a computer to an audio output device such as headphones may involve the transmission of audio signals via short-range wireless technologies like BT. Illustratively, a computer, equipped with BT capabilities, may establish a connection with compatible headphones to facilitate the streaming process. The communication of audio streams may occur through the exchange of data packets containing audio information, following established BT protocols. Upon pairing and connection establishment, the computer may stream audio data to the headphones, which the headphones may decode and play the received audio stream, enabling the user to listen to audio output wirelessly without direct physical connections.

For instance, when a user pairs BT-enabled headphones with a computer, the computer may initiate a discovery process to identify and establish a connection with the headphones. Once paired, the computer can stream various audio content, including music, videos, or calls, directly to the headphones. Traditionally at this stage, the computer may designate the other communication device, which is the headphones in this example, as available audio inputs and outputs of the computer and may disable and/or turn off audio I/O devices of the computer.

The audio data that the computer may transmit in digital format, may be received by the headphones. A processor of the headphones may decode received audio data of the audio stream into analog signals, and then may reproduce as sound waves through the headphone speakers, enabling the user to listen to the streamed audio output without the constraints of wired connections. This seamless communication between the computer and headphones via BT technology facilitates wireless audio streaming, enhancing user mobility and convenience.

In accordance with various aspects, the user may be involved in certain scenarios, which may divert the audial cognition of the user away from the real environment of the user. Illustratively, active noise-canceling headphones have become a popular choice for individuals seeking to minimize external noise and enhance their audio experience. These headphones may utilize microphones to detect ambient sounds and then generate anti-noise frequencies to cancel out or reduce unwanted background noise. By employing this technology, active noise-canceling headphones can create a more immersive listening environment, allowing users to focus on their audio content without disturbances from surrounding noise, such as traffic or conversations in crowded spaces.

Additionally, and/or alternatively, augmented reality (AR) environments may integrate digital information and virtual elements into the real world, offering users an enhanced and interactive experience. AR technology may overlay computer-generated content onto the user's view of the physical environment through devices like smart glasses, smartphones, or specialized headsets. This technology may blend the real world with virtual elements, enabling applications ranging from gaming and entertainment to professional fields such as healthcare, education, and industrial training, where users can interact with digital information in real-time within their physical surroundings.

When using active noise-canceling headphones or in augmented reality environments, users may encounter a notable problem: the inability to perceive crucial emergency alerts, like emergency alarms or doorbells. These alerts that are inherently designed to signal critical situations, might go unheard due to an isolation of the user, which may illustratively be created by active noise cancellation or the immersive nature of augmented reality. The BT connectivity, often employed to deliver these alerts to headphones or AR devices, may face limitations in overriding or interrupting ongoing audio streams, thereby impeding the transmission of urgent notifications. This issue may be considered to arise from the inherent design of active noise-canceling headphones and the immersive nature of augmented reality experiences, which aim to block external sounds or immerse users fully in a simulated environment. Consequently, despite BT connections being established between devices, the prioritization of ongoing audio or the immersive AR environment may take precedence over emergency alerts, creating a potential safety concern for users who rely on these alerts for critical information or warnings.

In other words, due to the active noise cancellation feature in headsets and the immersive nature of augmented reality, users may inadvertently miss crucial interruptions, potentially impacting their safety or awareness in various situations. In these scenarios, the active noise cancellation in headphones can isolate users from their surrounding environment, making it challenging to hear important alerts, like emergency alarms or doorbells. Similarly, augmented reality environments may often prioritize virtual sounds or experiences, potentially overriding or masking essential external alerts. Additionally, when an external audio device, such as headphones, is connected to a host device like a smartphone or computer, the device's built-in or other connected audio input devices (e.g. microphone) often gets disabled, further hindering the user's ability to pick up ambient sounds or external interruptions, potentially affecting their responsiveness to critical situation.

In accordance with various aspects provided herein, a primary device may, instead of disabling the device's built-in or other connected audio input devices, use the device's built-in or other connected audio input devices to identify an auditory interruption within the environment, which may be indicative of a critical situation, an emergency alert, a doorbell, a baby crying sound, a thunderstorm, etc. In various aspects, the primary device may stream the audio data, in which the auditory interruption is identified, into to the established connection with a secondary device to inform the user audially isolated from the environment.

Aspects in this context are to be described by referring to the communication device 500 described in accordance with FIG. 5. It is to be noted that, although aspects described in this context may be combined and co-exist with further aspects provided in this disclosure, examples provided herein may also be implemented in a communication device only for the aspects described in this context.

In accordance with various aspects provided herein, the communication device 500 may include an interface to stream audio data via a link established with a further communication device. The further communication device may be another BT device to which the communication device 500 sends audio data for its reproduction. For example, the communication device 500 may be a source device for the audio data and the further communication device 500 may be a sink device for the audio data. Illustratively, the communication device 500 may send the audio data to a BT audio output device, such as BT headphones, a BT headset, a BT speaker, BT earphones, etc. In particular, the further communication device may be configured to apply a noise cancellation method to provide audio output (e.g. a noise cancellation headset) or may be an immersive device (e.g. an augmented reality (AR) headset). The processor 501 may establish the link between the communication device 500 and the further communication device in accordance with known methods (e.g. BT discovery and connection requests).

The processor 501 may encode first audio data to transmit BT communication signals including the audio data (i.e. encoded audio data) via the established link to the further communication device over the communication interface 503 to stream the first audio data to the further communication device over the established link. The first audio data may include an audio content that the processor 501 may have generated.

In accordance with various aspects provided herein, the processor 501 may monitor second audio data received from the audio interface 504 during streaming of the first audio data to the further communication device. The second audio data is representative of audio signals received from the environment in which the communication device 500 is located, and more precisely in which the corresponding audio input device providing the second audio data is located. Illustratively, the second audio data represents the audio environment of the communication device 500.

The processor 501 may monitor the second audio data to identify an auditory interruption received from the environment. The processor 501 may analyze information provided by the second audio data to identify information that is representative of a presence of an auditory interruption within the information provided by the second audio data.

In accordance with various aspects provided herein, the processor 501 may monitor the second audio data if the processor 501 determines that the further communication device has a noise cancellation feature. For example, the memory 502 may store information representative of a type of the further communication device. The processor 501 may initiate the monitoring of the second audio data if the type indicates that the further communication device has a noise cancellation feature. In some examples, the processor 501 may decode a message received from the further communication device that may indicate that the further communication device has a noise cancellation feature.

In accordance with various aspects provided herein, the processor 501 may monitor the second audio data if the processor 501 determines that an application layer software that provides the first audio data is an augmented reality software. The processor 501 may initiate the monitoring of the second audio data if information received from the application layer software indicates that the first audio data includes audio content of an augmented reality software.

The processor 501 may monitor the second audio data when there is an established link to stream the first audio data in a first configuration, and the processor 501 may, in a second configuration, disable and/or turn off the audio input interface by which the processor 501 receives the second audio data. In some examples, the processor 501 may disable and/or turn off the corresponding audio input device that provides the second audio data.

An auditory interruption may refer to a sudden, distinct sound or noise that disrupts the ambient audio environment within the perceivable region of the respective audio input device providing the second audio data, which may draw immediate attention due to its unique characteristics. Such auditory interruptions may particularly indicate a critical or an important event, such as an emergency alarm, a doorbell, a cry of a baby, or designated environmental sounds like thunderstorms.

The processor 501 may identify the auditory interruption based on an audio detection that identify particular sound levels in view of the background noise, or based on designated sound patterns, frequencies, durations, and/or contextual information of the second audio data. In the context of identification of an auditory interruption from the second audio data, it is to be noted that the second audio data may include an analog signal, i.e. an audio signal.

The processor 501 may identify the auditory interruption based on various methods. For example, the processor 501 may perform one or more designated pattern recognition algorithms to analyze the second audio data. Illustratively, the processor 501 may identify specific patterns or signatures associated with emergency alarms, doorbells, or other critical sounds indicated by the second audio data. For example, emergency alarms may have distinct frequencies, durations, or patterns that differ from regular background noise. The processor 501 may identify an auditory interruption by detecting such distinct frequencies, and/or durations, and/or patterns.

The processor 501 may perform a spectral analysis of the second audio data and identify the auditory interruption based on the frequency components of the second audio data. For example, a designated auditory interruption may have unique frequency components or a unique distribution of frequency components, or temporal characteristics that distinguish them from regular ambient noise. The processor 501 may identify an auditory interruption by detecting such frequency components, and/or such distributions of frequency components, and/or such temporal characteristics.

The processor 501 may perform a speech recognition analysis of the second audio data to identify the auditory interruption. For example, the processor 501 may identify, via the speech recognition analysis, designated words or phrases from the second audio data, which are conventionally used to express an emergency situation, such as "emergency", "fire", "evacuate", etc.

The processor 501 may access contextual information received from input devices of the I/O devices 508, which the contextual information may include information representative of environmental conditions of the communication device 500. The processor 501 may identify an auditory interruption based on various characteristics (e.g. amplitude, frequency) of the second audio data and the contextual information.

In some examples, the processor 501 may identify an auditory interruption by using a trained artificial intelligence or machine learning model (AI/ML), that has been trained to recognize various auditory interruptions. In some examples, the trained AI/MI, may be trained based on previously detected user movements and/or facial expressions within previous presences of auditory interruptions.

In some of the above-mentioned methods associated with identification of the auditory interruption, or in some methods, the memory 502 may include reference information representative of one or more predefined and/or predetermined auditory interruptions. Illustratively, the reference information may be referred to as reference samples, reference patterns, and/or reference templates. The processor 501 may compare the second audio data (e.g. portions of the second audio data) against the one or more predefined and/or predetermined auditory interruptions indicated by the reference information to identify the auditory interruption.

If an auditory interruption is identified, the processor 501 may cause the communication device to take various actions to indicate the presence of the auditory interruption to the user.

For example, the processor 501 may cause one or more output devices of the I/O devices 508 to notify the user about the presence of the auditory interruption. For example, the processor 501 may generate a visual notification through a display device to notify the user visually, such as generating a user interface (UI) notification to be displayed on a display device, flickering lights communicatively coupled to the communication device 501 in smart home systems, etc.

For example, the processor 501 may notify the user about the presence of the auditory interruption by generating an audial notification. The processor 501 may interrupt encoding of the first audio data transmitted via the established BT link to the further communication device, and/or cause the audio output of the further communication device to be muted, and/or cause the further communication device to provide no audio output. In some examples, the processor 501 may pause streaming of the first audio data via the established link and/or prevent operation of the logical link streaming the first audio data temporarily or permanently. In an example, the processor 501 may disconnect the established link. Furthermore, the processor 501 may mute or decrease volume of the audio streamed via the established link.

In accordance with various aspects provided herein, the processor 501 may send the identified auditory interruption via the established link to the further communication device. The processor 501 may encode the second audio data comprising the identified auditory interruption for a transmission with the established link to the further communication device. Illustratively, the processor 501 may encode a portion of the second audio data in which the auditory interruption is identified for the transmission. The portion may correspond to a predefined time period (e.g. between 0-5000ms) including the auditory interruption.

In some examples, the processor 501 may start encoding the second audio data for the transmission to the further communication device via the established link instead of the first audio data. In some examples, the processor 501 may combine the first audio data and the second audio data, such that audio signal of the second audio data is overlaid on the audio signal of the first audio data, and the processor 501 may encode the combined first and second audio data for the transmission. In some examples, the processor 501 may stream the second audio data via the established link instead of streaming the first audio data.

FIG. 6 shows schematically an example of a block diagram to obtain encoded audio data for a transmission via an established link by the communication device 500. The illustration includes the audio interface 505, the audio input device 507, a controller 611, an audio content provider 612, an auditory interruption monitor 613, an audio encoder 614, and a transmitter 615 to transmit BT communication signals including encoded audio data. Illustratively, a processor (e.g. the processor 501) may implement the controller 611, the audio content provider 612, the auditory interruption monitor 613, and the audio encoder 614. The communication interface 503 may include the transmitter 615.

The audio content provider 612 may generate first audio data to be transmitted to a further communication device. Illustratively, the audio content provider 612 may include a software stored in the memory 502 (e.g. an audio player software, an audio streaming software, a teleconference call software, a gaming software, etc.) and/or an operating system that generates audio data including a first audio content. The communication device 500 may have established a BT link with the further communication device, via which the communication device 500 streams the first audio data to the further communication device. Through various operations performed by the communication device 500, the established link may be configured to stream the first audio data to the further communication device as the first audio data is provided by the audio content provider 612 in real-time or near-real-time.

The controller 611 may control a logical link to be used to stream audio via the established link. The controller 611 may receive the first audio data from the audio content provider 612 and provide the received first audio data to the audio encoder 614. Additionally, or alternatively, the controller 611 may cause the audio encoder 614 to receive the first audio data. Similarly, the controller 611 may receive the second audio data from the auditory interruption monitor 613 and provide the received second audio data to the audio encoder 614. Additionally, or alternatively, the controller 611 may cause the audio encoder 614 to receive the second audio data.

The audio interface 504 may provide the second audio data representative of audio signals received from the audio input device 507 coupled to the communication device. The second audio data may include representation of audio signals of the environment of the communication device 500. For example, the second audio data may represent audio signals detected from the environment in which the user of the further communication device is located.

The auditory interruption monitor 613 may identify an auditory interruption detected by the audio input device 507. The auditory interruption may determine, based on the second audio data, whether there is an auditory interruption present in the second audio data (e.g. within the audio signals received from the environment). The auditory interruption monitor 613 may identify the auditory interruption as exemplarily described in accordance with the aspects described in FIG. 5 for the processor 501. The auditory interruption monitor 613 may send a signal to the controller 611 in response to an identification of the auditory interruption. For example, the auditory interruption monitor 613 may send information representative of an identification of the auditory interruption to the controller 611.

The controller 611 may, in response an indication provided by the auditory interruption monitor 613 about an identified auditory interruption, cause the second audio data including the identified auditory interruption to be received by the audio encoder 614. In some examples, the auditory interruption monitor 613 may include a buffer memory that may store audio data being analyzed to identify the auditory interruption. Once the auditory interruption monitor 613 identifies the auditory interruption within the stored audio data, the controller 611 may cause the stored audio data to be received by the audio encoder 614.

The audio encoder 614 may encode received audio data (i.e. the first audio data, the second audio data, or both) based on a designated encoding configuration to obtain the encoded audio data. As described in this disclosure, the audio encoder 614 may encode the received audio data according to a designated codec. In some examples, the A2DP profile of the BT protocol stack may encode the received audio data and output the encoded audio data to further profiles or functions of the BT protocol stack to transmit BT communication signal carrying the encoded data to further communication device via the transmitter 615.

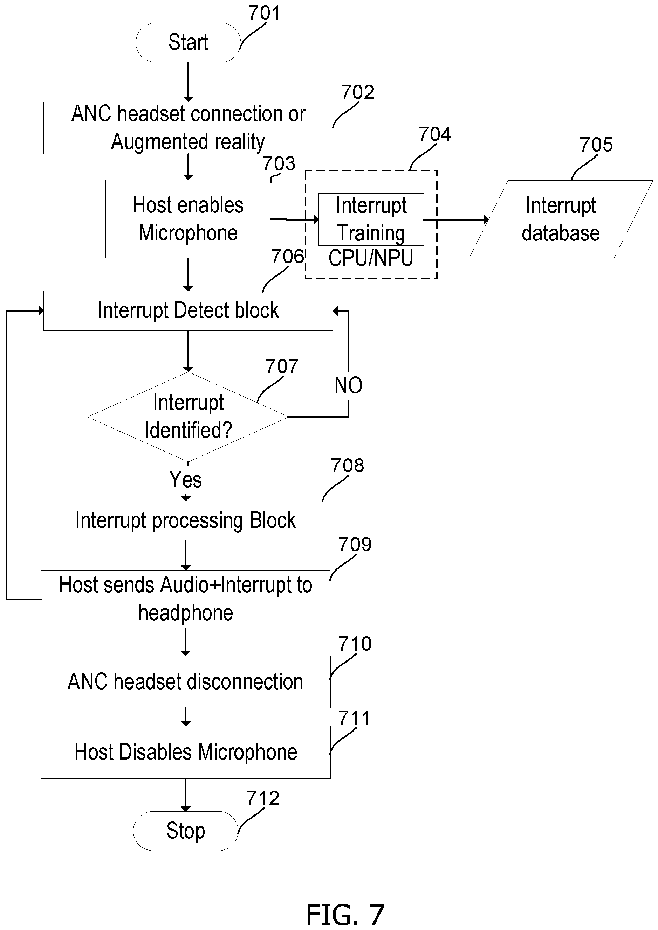

FIG. 7 shows an illustrative example of a flow diagram which a processor may perform. The processor implementing the aspects described for the flow diagram may be the processor 501. In 701, the processor may initiate the procedure described herein. In 702, the processor may establish a BT connection with a further communication device located within an audio environment, which may be a noise cancellation headset, an immersive device, and/or an AR device to stream first audio data to the further communication device.

In 703, the processor may enable an audio input device located in the audio environment and/or an audio interface that receives audio signals provided by the audio input device. In an example, in which the identification of audio interruptions includes an employment of a trained AI/ML, in 704, the processor may use second audio data received from the audio interface to train the AI/ML. In 705, the AI/MI, may update model database based on the training, as exemplarily described in this disclosure.

In 706, an interruption detection block (e.g. the auditory interruption monitor 613) may analyze a received portion the second audio data representative of a detected audio of a first period of time to identify auditory interruptions, which may involve the use of the trained AI/ML. In 707, if the interruption detection block does not identify an auditory interruption within the received portion, the interruption detection block may receive a further portion of the second audio data representative of a detected audio of a second period of time. If the interruption detection block identifies an auditory interruption within the received portion, in 708, the processor may process the received portion of the second audio data. In 709 the processor may cause the encoded audio data including the first audio data and the second audio data to the further communication device. In 710, the processor may disconnect the further communication device. In 711, the processor may disable the audio input device and/or the audio interface. In 712, the flow stops.

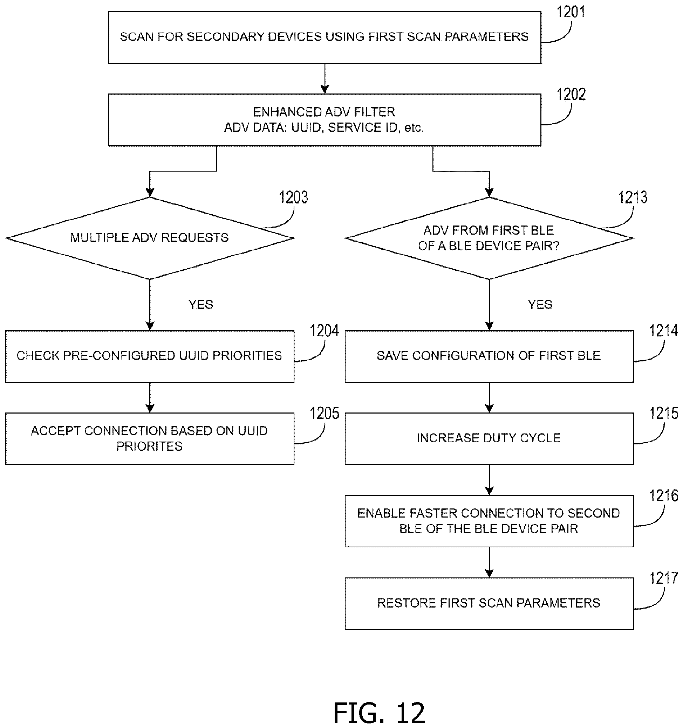

In accordance with various aspects provided herein, the processor 501 may identify auditory interruptions using a trained AI/ML. The processor 501 may implement the trained AI/ML in accordance with the aspects described in FIG. 12. In accordance with various aspects described herein, the trained AI/ML may receive input data representative of a received second audio data indicating detected audio by an audio input device within an audio environment and contextual information obtained from the audio environment. The trained AI/ML may provide an output representative of a generated reference information. Illustratively, the trained AI/MI, may be based on a generative model. As described in accordance with FIG. 5, the processor 501 may use the reference information to compare received second audio data with the reference samples, reference signals, and/or reference patterns provided by the reference information. In other words, the trained AI/ML may output data representative of reference samples, reference signals, and/or reference patterns.

The contextual information may include sensor data representative of detections within the audio environment, which the I/O devices 508 may have detected, or estimates based on the sensor data. For example, the contextual information may include an estimate behaviour pattern of the user, which may be based on a situation in which the user reacts to an identified or known auditory interruption. In some examples, the contextual information may include sensor data representative of facial expressions of the user and/or sensor data representative of user movements. Illustratively, an I/O device, such as a low power camera or sensor, may provide such sensor data. Through reactions of the user indicated by the contextual information to various specific sounds indicated by the second audio data respectively, the trained AI/MI, may learn reference signals, reference samples, and/or reference patterns that indicate auditory interruptions to which the user reacts.

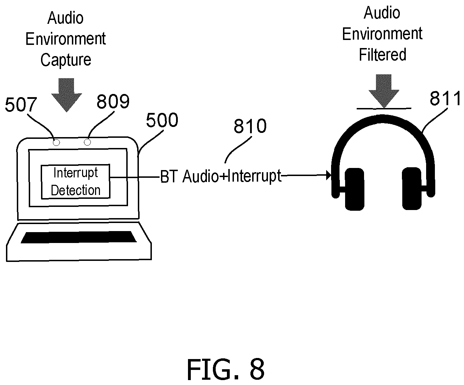

FIG. 8 shows an illustrative example of an audio environment. The communication device 500 is illustrated herein as a computer configured to stream BT audio to a further communication device illustrated as a noise cancelling headphone 811. For a first period of time the communication device 500 may stream BT audio via the established BT link to the noise cancelling headphone 811 (e.g. by sending audio of a music streaming application for the user to listen to). At the first period of time, the processor 501 may monitor input audio data received from the audio input device depicted as an integrated microphone 507 of the communication device 500 to identify designated audio interruptions.

In some examples, during the first period of time or a period of time prior to the first period of time, the processor 501 may also monitor input audio data received from the integrated microphone to learn user behavior patterns. Illustratively, the communication device 500 may include a visual sensor illustrated as an integrated camera 809 to detect user movements and/or facial expressions as reactions to identified auditory interruptions, and the AI/ML described above may learn from identified auditory interruptions causing a change of user behavior pattern and store reference signals, reference templates, and/or reference pattern indicative of such identified auditory interruptions to use in auditory interruption identification, when needed.

At as a second instance time following the first period of time, the processor 501 may detect an audio interruption from the monitored input audio data. In response to the detection, the processor 501 may take actions to notify the user wearing the noise cancelling headphone. Illustratively, the processor 501 may cause the established BT link to send both BT audio and a portion of the input audio data including the identified interruption. Further, the processor 501 may start streaming the input audio data to the noise cancelling headphone 811 automatically, without a user interaction indicative of a streaming of the input audio data.

In accordance with various aspects described herein, in audio communication using BT technology, codec selection may be a crucial aspect influencing performance, which may be inherently performed during the initiation of a session. However, limitations may arise when considering scenarios beyond routine usage. Traditionally, communication devices codec selection solely during session initialization, which may pose challenges when confronted with non-standard situations in which initial conditions associated with communication change, such as departing the range of communication, encountering low battery levels, or facing adverse channel conditions. These scenarios can distort the user experience and may impact audio quality and connection stability.

It is also to be noted that there is no singular codec that may address the diverse operational points within a BT link. Hence it is desirable to use different codecs and/or optimize present codec in different situations to address various performance metrics for the audio communication. In some examples, a user may interact through a user interface to select a particular codec, but this may not always be desirable, in particular if conditions change which would require the user to be constantly occupied with the codec selection.

In particular, considering the desired mobility of users for BT communication, this may lead to a decline in overall audio quality and user experience. Instances of sudden connection losses without prior warning may occur when users approach or enter zones beyond the operational range associated with the connection. In some scenarios, it may be desirable to notify users when they are predicted or estimated to go beyond the operational range.

In accordance with various aspects provided herein, it may be desirable for a BT communication device to change audio encoding and/or decoding methods used to transmit and/or receive audio data via an established link during audio communication via the established BT link adaptively, which may be based on communication conditions and/or performance associated with the established physical BT link. In accordance with various aspects described herein, it may be desirable to send a notification, which may be in form of an aural alarm, to a user indicating that the distance and/or radio communication performance of the established physical link approaches to undesirable metrics, which may be indicative that a mobile BT device at one end of the established physical BT link approaches to an out-of-range zone.

Aspects in this context are to be described by referring to the communication device 500 described in accordance with FIG. 5. It is to be noted that, although aspects described in this context may be combined and co-exist with further aspects provided in this disclosure, examples provided herein may also be implemented in a communication device only for the aspects described in this context.

In accordance with various aspects provided herein, the communication device 500 may include an interface to stream audio data via a link established with a further communication device. The further communication device may be another BT device to which the communication device 500 sends audio data for its reproduction. Illustratively, the communication device 500 may send the audio data to a BT audio output device, such as BT headphones, a BT headset, a BT speaker, BT earphones, etc.

For example, the communication device 500 may be the source device for the audio data and the further communication device 500 may be the sink device for the audio data, or alternatively, the communication device 500 may be the sink device for the audio data and the further communication device may be the source device for the audio data. In some examples, the communication device 500 may be the sink device for first audio data exchanged via the established link and the communication device 500 may be the source device for second audio data exchanged via the established link, while the further communication device may be the source device for the first audio data exchanged via the established link and the further communication device may be the sink device for the second audio data exchanged via the established link.

The processor 501 may establish the link between the communication device 500 and the further communication device in accordance with known methods (e.g. BT discovery and connection requests). In accordance with various aspects provided herein, the processor 501 may perform a negotiation procedure with the further communication device to negotiate about which audio encoding and decoding method is to be used to stream audio via the established link. A codec may define the audio encoding and decoding method. The processor 501 may perform the negotiation procedure within the establishment of the link with the further communication device and/or when initiating an audio streaming session.

The processor 501 may perform a capability exchange to negotiate with the further communication device, in which the processor 501 may decode capability information received from the further communication device. Illustratively, the processor 501 may decode a received service discovery protocol (SDP) message comprising capability information representative of one or more supported audio codecs of the further communication device and capabilities associated with the one or more supported audio codecs. In some examples, the capability information may include one or more preferred audio codecs among a plurality of supported codecs.

In some examples, the processor may perform methods other than the SDP, such as through vendor-specific extensions or profile-specific extensions, to negotiate about which codec is to be used to stream audio via the established link. Illustratively, the processor 501 may initialize the A2DP to establish an A2DP connection to stream audio with the further communication device. The processor 501 may exchange information during establishment of the A2DP connection to decode a message received from the further communication device including the capability information of the further communication device.

Based on the received capability information, and supported codecs of the communication device 500, the processor 501 may perform the negotiation to exchange messages with the further communication device to agree upon one common audio codec that both the communication device 500 and the further communication device support. It is to be noted that there may be multiple common codes, from which the processor 501 selects a single common audio codec.

In accordance with various aspects provided herein, the processor 501 may store at least one of the capability information of the further communication device and/or information representative of multiple common audio codecs supported by the communication device 500 and the further communication device to into the memory 502 to identify multiple common audio codecs when needed, as described in this disclosure.

Once the single common audio codec is selected, the processor 501 may encode and/or decode audio data exchanged for the audio stream via the established link. Illustratively, in encoding operation, the processor 501 may encode transmit audio data by using the selected common audio codec to obtain an encoded transmit audio data, and the communication interface 503 may transmit BT communication signals carrying the encoded transmit audio data to the further communication device via the established link. In decoding operation, the communication interface 503 may receive BT communication signals carrying encoded receive audio data that has been encoded by the further communication device using the selected codec. The processor 501 may decode the encoded receive audio data to obtain the receive audio data.

In some examples, the processor 501 may assess supported codecs of the communication device 501 and supported codecs of the further communication device, in various terms such as supported bitrates, designated audio quality, power consumption, etc. Accordingly, the processor 501 and the further communication device may determine the single common audio codec that is estimated to offer the best compromise in accordance with the capabilities of the communication device 500 and the further communication device. In some examples, the processor 501 may prioritize higher quality codecs among the multiple common audio codecs and/or select the single common audio codec based on compatibility and/or available bandwidth.

It is to be noted that BT technology supports various codecs requiring varying amount of processing resources, computation latency and complexity, different power consumptions, different audio quality, and particularly providing different maximum bit rates. Illustratively, SBC supports up to 320kbps, AAC supports up to 250kbps, audio processing technology X (aptX) supports up to 352 kbps, aptX HD supports up to 576kbps, LDAC supports up to 990kbps. It is further to be noted that some codecs may have different configurations, which sometimes be based on the corresponding profile implementing the codec.

Illustratively, both HFP and A2DP may implement the low complexity communications codec (LC3), in which the processor 501 may optimize the LC3 within the HFP for voice calls with a lower bit rate, while the processor 501 may optimize the LC3 within the A2DP for high-quality audio streaming up to 384kbps. Furthermore, due to the nature of the optimizations of the profiles and compatible operations within each profile, profiles may also be associated with various audio qualities and various latency characteristics.

As described herein, the processor 501 may have initiated a streaming of an audio stream, and the processor 501 may stream the audio stream via the established link by encoding and decoding audio data within audio streaming pipeline with the selected common audio codec, which may be referred to a first audio codec. In accordance with various aspects provided herein, the processor 501 may change the audio codec being used to stream the audio stream via the established link to a different common audio codec adaptively during streaming of the audio stream via the established link.

In other words, during an active audio stream via the established link in which the processor 501 streams audio by encoding and/or decoding audio data using the first audio codec, the processor 501 may select a second audio codec to encode or decode further audio data to be exchanged with the active audio stream via the established link. The second audio codec may be a common audio codec from multiple common audio codecs stored in the memory 502 that is different from the first audio codec.

In accordance with various aspects provided herein, the processor 501 may encode a message indicative of the selected second audio codec for a transmission to the further communication device to cause the further communication device to switch its codec to encode and/or decode audio data of the audio stream from the first audio codec to the second audio codec. The message may further include schedule information to schedule simultaneous switching of previously agreed codec into the second audio codec at the both communication devices.

In accordance with various aspects provided herein, the processor 501 may perform another negotiation procedure with the further communication device during the initiated audio stream to select the second audio codec. Through the another negotiation procedure, which the processor 501 may perform as described in this disclosure, both the processor 501 and the further communication device may agree on another common audio codec as the second audio codec that is different from the first audio codec.

Illustratively, the processor 501 may include an audio encoder to encode audio data using a selected codec to obtain encoded audio data for a transmission to the further communication device via the established link, the processor 501 may cause the audio encoder to switch the selected codec from the first audio codec to the second audio codec, so that the audio encoder starts using the second audio codec to encode further audio data. Illustratively, the processor 501 may include an audio decoder to decode audio data using a selected codec from an encoded audio data received from the further communication device via the established link, the processor 501 may cause the audio decoder to switch the selected codec from the first audio codec to the second audio codec, so that the audio decoder starts using the second audio codec to decode further audio data.

In accordance with various aspects provided herein, the processor 501 may apply a codec rate adaptation determination process used to dynamically adjust the data rate of the established link to optimize performance. The processor 501 may accordingly select the second audio codec according to a performed code rate adaptation determination process, which may indicate to an increase or a decrease of the code rate for the established link in accordance with the first audio codec. Based on the indication, the processor 501 may select the second audio codec from the multiple common audio codecs that is estimated to increase or decrease the code rate.

In some examples, the code rate adaptation determination process may determine whether to increase or decrease the code rate based on a link state of the established link and/or received signal strength indicator (RSSI) values obtained by the communication interface 503. The communication interface 503 may include a measurement circuit to determine RSSI values from BT communication signals received from the further communication device.

In accordance with various aspects provided herein, the processor 501 may determine a quality metric for the established link, which may represent the quality of communication using the established link. The processor 501 may determine the quality metric based on link state information representative of at least one of: a battery status of the communication device 500 or the further communication device; physical communication channel parameters for the established link; received signal strength indicators (RSSIs) received from the further BT communication device; RSSI values obtained from the communication interface 503, telemetry data associated to the further communication device, such as ACK packets, received packets; an estimate distance between the communication device 500 and the further communication device; and/or a presence and/or a number of interfering further communication devices within the environment of the communication device 500.

In accordance with various aspects provided herein, the processor 501 may determine the quality metric for the established link based on information received from a software executed by the processor 501, which the software provides the audio data to be transmitted to the further communication device and/or receives the audio data decoded from encoded audio data received from the further communication device. Illustratively, the software operates at an application layer of the BT stack and provides and/or receives audio data from the application layer. Illustratively, the software may provide information indicative of the link quality and/or audio quality, which may be detected by the software, and the processor 501 may determine quality metric based on the provided information.

Furthermore, the memory 502 may store codec information indicative of designated bit rates for each codec supported by the communication device. The processor 501 may accordingly, based on the determined quality metric indicative of estimated quality of the established link that is based on the link state and addition information as described above, the processor 501 may select the second audio codec according to the stored codec information. Illustratively, the processor 501 may determine a bit rate suitable to stream the audio data via the established link according to the determined metric, and the processor 501 may select the second audio codec that fulfills the suitable bit rate based on the codec information.

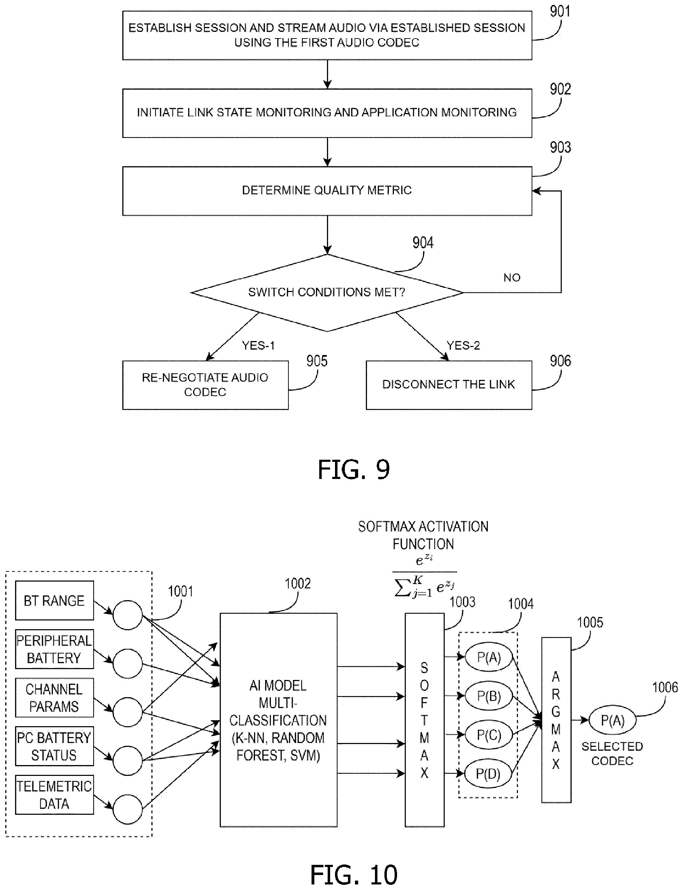

FIG. 9 shows an illustrative example of a flow diagram that the processor 501 may perform in accordance with various aspects provided herein. In 901, the processor 501 may establish a session to stream audio via a link that is established with the further communication device using the first audio codec. In 902, the processor 501 may initiate link state monitoring and application monitoring, in which the processor 501 may obtain the link state information and the application layer information as described above. In 903, the processor may determine a quality metric based on obtained link state information and obtained application layer information.

In 903, the processor 501 may determine if designated conditions to switch the first audio codec to stream the audio with the established session based on the determined quality metric. Illustratively, designated conditions may include a threshold applied to the determined quality metric. If the designated conditions are not met, the processor 501 may determine a new quality metric based on further obtained link state information and further application layer information associated with a further period of time, and determine if designated conditions are met according to the new quality metric. In some examples, the processor 501 may initiate a hysteresis timeout procedure to wait for a designated period of time before obtaining the further link state information and the further application layer information.

In one example, in 905, if the designated conditions to switch the first audio codec are met, the processor 501 may perform the further negotiation procedure as described in this disclosure to negotiate the second audio codec with the further communication device. In another example, in 906, if the designated conditions to switch the first audio codec are met, the processor 501 may disconnect the established link with the further communication device, and/or close the established session and/or stop streaming of the audio stream. In some examples, the processor may perform procedures described in 906, if the processor 501 is unable to perform the further negotiation with the further communication device and/or if the processor 501 is unable to identify a second common audio codec.

In accordance with various aspects provided herein, the processor 501 may select the second audio codec using a trained AI/ML. The trained AI/ML may be configured to receive input data based on the link state information and provide output data representative of a selected audio codec. The processor 501 may implement the trained AI/ML in accordance with the aspects described in FIG. 12.

In some examples, the trained AI/MI, may be a multi-classification machine learning model that may leverage various features indicated by the link state information, such as BT range, the remaining battery status of the communication device 500 and/or the further communication device, channel parameters representative of physical link characteristics and conditions, firmware telemetric data, etc. The multi-classification machine learning model may be trained to predict a target value based on these features, which the target value represents the selection of the most suitable codec for the context indicated by these features.

It is to be noted that once the multi-classification machine learning model is trained using historical data, it becomes capable of inferencing. This means that the model can analyze and evaluate new sets of feature values provided to the model, thereby enabling the model to predict the optimal codec choice for a particular context or set of conditions. This process of inferencing may allow the model to make codec selection recommendations based on the input data, facilitating efficient and effective codec choice in real-time scenarios.

FIG. 10 shows an illustrative example of the multi-classification machine learning model. The multi-classification machine learning model 1002 may be configured to classify input data into multiple distinct classes or categories, which may be configured as multiple common audio codecs, or multiple audio codecs supported by the communication device 500. In some examples, the multi-classification machine learning model may be configured according to one of K-Nearest Neighbors (K-NN), Random Forest, and Support Vector Machines (SVM) algorithms.

Illustratively, in K-NN, the multi-classification machine learning model 1002 may be configured to classify data points based on their proximity to other data points in the feature space. Given a new data point, the multi-classification machine learning model 1002 may be configured to identify its nearest neighbors in the training set and may assign a class label based on the most common class among those neighbors. In Random Forest: Random Forest, the multi-classification machine learning model 1002 is configured to operate by constructing multiple decision trees during its training. The training agent may train each tree in the forest independently using random subsets of the data and features. The multi-classification machine learning model 1002 may determine the output by a final classification decision that is made by aggregating the predictions of individual trees. In SVM, the multi-classification machine learning model 1002 may be configured to find the optimal hyperplane that best separates different classes in the feature space via aiming to maximize the margin between classes while minimizing classification errors.

In various aspects provided herein, the training agent may train the multi-classification machine learning model 1002 using the training data in accordance with the aspects described in FIG. 12 to adjust AI/ML parameters to provide an output indicative of a selected audio codec from a plurality of audio codecs via classification. The training agent may cause the multi-classification machine learning model 1002 to generate a weight matrix including AI/ML parameters associated with the features indicated by the training input data. In some examples, the training agent may perform a stochastic gradient descent (SCD) algorithm during the training to update the AI/ML parameters iteratively in the direction that minimizes the loss function by taking small steps down the gradient. In some examples, the processor 501 may determine hyperparameters of the multi-classification machine learning model 1002 through a designated hyperparameter tuning technique, such as grid search, random search, or Bayesian optimization.

The multi-classification machine learning model 1002 may be configured to receive input data 1001 including values based on the link state information, which has been illustrated with BT range, the remaining battery status of the further communication device, channel parameters representative of physical channel conditions of the established link, the remaining battery status of the communication device 500 and the telemetry data.

Illustratively, the processor 501 may obtain the link state information representative of the aspects illustrated above. Furthermore, the processor 501 may, via the data processing block described in this disclosure, perform feature extraction to select and transform the link state information into feature values and/or vectors, through which the processor 501 may use principal component analysis.

The multi-classification machine learning model 1002 may process the input data to make the classification based on the AI/ML parameters associated with the trained multi-classification machine learning model 1002 to classify the features indicated by the input data 1001 into classes of multiple audio codecs. The multi-classification machine learning model 1002 may perform calculations to determine a score for each audio codec of the multiple audio codecs, in which each score is indicative of a confidence or likelihood of selection of the respective audio codec.

The multi-classification machine learning model 1002 may provide the output scores of multiple audio codecs into a softmax activation function 1003 to normalize them and/or convert them into probabilities 1004. An argmax function may receive the normalized scores and/or the probabilities and determines the selected audio codec 1006 from the multiple audio codecs having the highest score/probability.

In accordance with various aspects described herein, the processor 501 may determine to add or remove a feature based on the link state information into the input data 1001 or add an audio codec to the multiple audio codecs or remove one of the multiple audio codecs from the classification. In some examples, the training agent may re-train the multi-classification machine learning model 1002.

In some examples, the training agent may perform a transfer learning process to improve the accuracy of the multi-classification machine learning model 1002 after one of the changes described above. Assuming that the training agent has trained the multi-classification machine learning model 1002 with the training data referred to as a Dataset A, upon determination of adding or removing parameters/classification, the training agent may obtain a further training data referred to as a Dataset B, which includes the new parameters or excludes removed parameters. The training agent may fine-tune the AI/MI, parameters obtained via the training using the Dataset A by adjusting AI/ML parameters associated with certain layers or components to allow the multi-classification machine learning model 1002 to adapt to the changes revealed by the Dataset B.

In accordance with various aspects described herein, the processor 501 may further determine a distance between the communication device 500 and the further communication device. The processor 501 may determine the distance based on RSSI measurements. The processor 501 may monitor obtained RSSI measurements and determine to send an aural alarm to the further communication device via the established link. Illustratively, the processor 501 may encode audio data indicative of the aural alarm to send the encoded audio data via the established link to the further communication device.

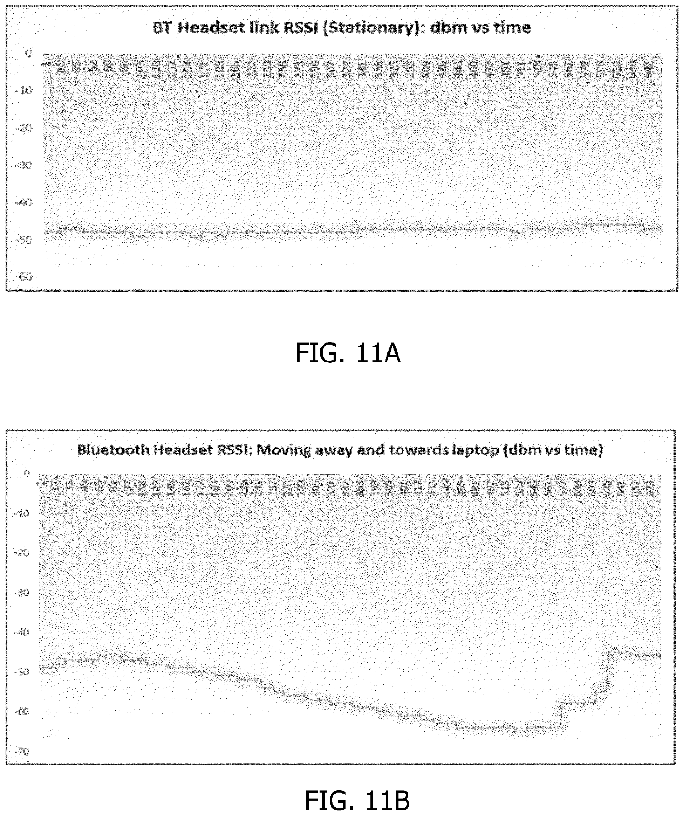

FIG. 11A shows an example of a graph illustrating measured RSSI values in dbm over time, when a computer as the communication device 500 and a BT headset as the further communication device have a distance smaller than 1 foot in between lying idle on the table. FIG. 11B shows an example of a graph illustrating measured RSSI values in dbm over time, when the computer is at a fixed location and the BT headset is moving within audio environment away and towards the computer. It is to be noted that the processor 501 may have collected RSSI dbm vs. time logs and plotted here for reference, which infers RSSI = 1/distance.

In accordance with various aspects described herein, the processor 501 may send the aural alarm when a critical boundary is crossed within the terms of the distance between the communication device 500 and the further communication device, which may indicate that the link quality of the established link is low. The processor 501 may accordingly monitor the distance between the communication device and the further communication device, which may be indicated by the RSSI measurements, and send the aural signal when the distance is above a distance threshold, and/or when RSSI measurements is below an RSSI threshold.

In accordance with various aspects provided herein, the processor 501 may use a trained AI/ML to determine if the further communication device is close to the communication device 500, at which the processor 501 does not send an aural alarm if the further communication device is close to the communication device 500, or if the further communication device is far from the communication device 500, at which the processor 501 sends an aural alarm.

In accordance with various aspects provided herein, the processor 501 may determine whether to send an aural alarm to the further communication device using a trained AI/ML. The trained AI/ML may be configured to receive input data based on the link state information and provide a binary output data representative of whether to send an aural alarm or not. The processor 501 may implement the trained AI/ML in accordance with the aspects described in FIG. 12.

In some examples, the trained AI/MI, may be a binary-classification machine learning model that may leverage various features indicated by the link state information, such as RSSI measurement, the remaining battery status of the communication device 500 and/or the further communication device, channel parameters representative of physical link characteristics and conditions, etc. The binary-classification machine learning model may be trained to map these features into two classes, in which one class is indicative of sending an aural alarm and another class is indicative of not sending an aural alarm.

It is to be noted that once the binary-classification machine learning model is trained using historical data, it becomes capable of inferencing. This means that the model can analyze and evaluate new sets of feature values provided to the model, thereby enabling the model to predict the decision of sending an aural alarm for a particular context or set of conditions. Illustratively, the training agent may train the binary-classification machine learning model with training data including labeled data points (e.g. far and near; or positive and negative; or 0 and 1; etc.) via offline training according to a classifier model such as SVM.

In accordance with various aspects provided herein, the processor 501 may implement the range classifier in the host stack and the processor 501 may send AI/ML parameters to the firmware using Host Controller Interface (HCI) commands.

In accordance with various aspects provided herein, the processor 501 may determine a hysteresis period to be used for selection of another audio codec to stream the audio via the established link and/or to be used to send an aural alarm. Illustratively, the processor may determine the second audio codec and cause functions associated with determination of a further audio codec to be prevented for a period of time designated as the hysteresis period after the processor 501 starts streaming audio by encoding and/or decoding using the second audio codec. Only after the hysteresis period, the processor 501 may determine a new quality metric or select a further audio codec. Similarly, the processor 501 may send an aural alarm to the further communication device for illustratively N times, N being an integer (e.g. 3). Then, the processor 501 may cause functions associated with determination of sending an aural alarm to be prevented for a period of time designated as the hysteresis period after the processor 501 has sent the Nth aural alarm. Only after the hysteresis period, the processor 501 may send a new alarm or start monitoring RSSI measurements.

BT Low Energy Audio is part of BT Core specification 5.3. LE Audio is emerging and may be considered as a candidate technology to allow replacement for classic BT headsets. LE Audio intends to bring features like optimal power savings on secondary (i.e. peripheral) devices, ability to integrate with hearing aid devices, support gaming audio, spatial audio, and low latency streaming. There are lot of enhancements being investigated with this context across multiple ecosystems like mobile communication devices, PCs, headsets, earbuds, hearing aids, etc.

In the realm of BT technology, LE Audio builds upon BLE, which has been initially introduced in the BT Core 4.0 specification. BLE may facilitate the transmission of smaller packets like sensor data as well. Its design emphasizes simplicity in the LE connection methodology. In a discovery procedure in BLE, in which secondary devices may perform advertising, while the central device may perform scanning; a connection establishment may occur when the LE host of the primary device attempts to connect to the advertising device. However, BT controllers may be considered to lack advanced handling to optimize connections between related BLE devices.

Presently, the configuration for BT audio involving voice/music may be considered to predominantly revolve around earbuds. Earbuds are a type of headphones, which are smaller in size compared to traditional over-ear or on-ear headphones, but without headbands or external frames. Earbuds include a pair of individual units, each for one ear, which may be connected by a wire or operating wirelessly via a BT technology, such as BLE. Each individual unit may include a battery, control circuitry (e.g. a processor), and a communication interface including a transceiver to transmit and/or receive BT communication signals (e.g. BLE communication signals).

One of the key technical features of the LE Audio is that the LE Audio may support for multi-stream audio transmission, in which a source device, which may be a primary device such as a computer or a mobile communication device such as smartphone, may stream audio to multiple sink devices. Accordingly, the source device may stream to BLE audio devices having a pair of individual audio units, such as earbuds or hearing aids, independently to ensure a synchronized playback of audio content. In this disclosure such BLE devices having a pair of individual audio units, such as an earbud or a hearing aid, are to be referred to as BLE device pair.

Within the BT context, BLE device pair may communicate with a primary device, that is paired with the BLE device pair, via established links. The BLE device pair may utilize a BT profile for audio transmission to allow streaming of audio content via the established links. However, as described above, in order to stream audio data with LE Audio, it is required that the primary device pairs each individual unit (i.e. a BLE device of the BLE device pair) of the BLE device pair separately and quasi-independently, as each BLE device of the BLE device pair may establish and maintain links with the primary device.

In this constellation, and in view of the discovery procedure within the BLE technology, pairing both BLE devices of the BLE device pair may take time. Assuming that the primary device may have identified one of the BLE devices of the BLE device pair, there may be a considerable delay until both of the BLE devices have finalized their discovery and connection procedures. It is further to be noted that the primary device may delay the configuration of the audio link until both of the BLE devices are connected, which may result in a considerable delay, in total, for the BLE device pair to become operational.

Although the above-mentioned problem may be tackled by simply increasing advertisement duty cycles of the BLE device pair, this would result in an impact to the power consumption of BLE device pairs. Furthermore, increasing the scanning period for the discovery of the primary device may further impact power consumption and may reduce spectral and temporal communication efficiency for the BLE communication by the primary device.

Aspects in this context are to be described by referring to the communication device 500 described in accordance with FIG. 5. It is to be noted that, although aspects described in this context may be combined and co-exist with further aspects provided in this disclosure, examples provided herein may also be implemented in a communication device only for the aspects described in this context.

In accordance with various aspects provided herein, the communication device 500 may be a BLE communication device. Accordingly, the processor 501 may perform BLE functions, including BLE host functions and BLE controller functions to communicate through the communication interface 503. The communication interface 503 may be configured to communicate via BLE communication signals. In particular, it is to be noted herein that the processor 501 may include one or more processors in which a first processor may perform the BLE host functions and a second processor may perform the BLE controller functions.

In accordance with various aspects provided herein, the processor 501 may adaptively adjust the scanning duty cycle of BLE discovery procedure based on an identification of a first BLE device of a BLE device pair. Illustratively, the processor 501 may increase the scanning duty cycle of the BLE discovery in response to the identification of the first BLE device of the BLE device pair. The processor 501 may identify the first BLE device of the BLE device pair based on information provided within the advertisement packet of the first BLE device, which may indicate that the first BLE device is a BLE device of a BLE device pair.

In accordance with various aspects provided herein, the processor 501 may adjust the scanning duty cycle with the BT host functions. For example, the BT host functions may adjust the scanning duty cycle dynamically based on the received advertisement report from the first BLE device. In accordance with various aspects provided herein, the processor 501 may adjust the scanning duty cycle with the BT controller functions. For example, the BT controller functions may dynamically adjust the scanning duty cycle by scaling up by performing a monitoring of received advertising reports. The BT controller functions may scale the scanning duty cycle back to the initial scanning duty cycle configured by the BT host functions after the second BLE device of the BLE device pair is connected.

In accordance with various aspects described herein, the processor 501 may perform a BLE discovery procedure. In the BLE discovery procedure, a secondary device may transmit BLE communication signals including advertisement packets to advertise its presence to other communication devices within the radio environment (i.e. advertise it is connectable). In some examples, advertisement packets may be directed to all communication devices that can receive the advertisement packets or advertisement packets may be directed to a specific communication device.

The secondary device may be configured to send advertisement packets according to a duty cycle to conserve power for advertising, which may be referred to as an advertising duty cycle. The advertising duty cycle may refer to the ratio of time that the secondary device spends in advertising mode to send advertisement packets compared to the total time in a designated period. Illustratively, a longer or a higher duty cycle may refer to the scenario in which the secondary device spends more time in the advertising mode for sending advertisement packets. Illustratively, a duty cycle may include an advertising interval representing a duration between to transmitted advertisement packets, and an advertising window representing a duration within the advertising interval, in which the secondary device transmits advertisement packets. In other words the advertising duty cycle may refer to the ratio of the advertising window to the advertising interval. The secondary device may send the advertisement packets within designated advertising channels.

In the BLE discovery procedure, a primary device, such as the communication device 500 for various aspects described herein, may initiate a scanning process in which the processor 501 may cause the communication interface 503 to listen for advertisement packets. The processor 501 may determine scan parameters including a scan interval representing how often the communication device 500 performs the scanning, and a scan window representing a duration of time in which the communication interface 503 actively listens for advertisement packets associated with the BLE discovery procedure. The scanning duty cycle may refer to the ratio of time in which the communication device 500 spends actively scanning for advertisement packets compared to the scan interval (i.e. the ratio of the scan window to the scan interval).

During the designated scan window, the processor 501 may cause the communication interface 503 to tune into each of designated advertising channels in sequence and listens for incoming advertisement packets. It is to be noted that the BLE technology may be configured with a frequency-hopping spread spectrum (FHSS) to transmit and receive BLE communication signals, and there may be more than one (e.g. three) designated advertising channels.

The communication interface 503 may detect incoming advertisement packets by detecting received packets matching a designated advertisement packet format. Illustratively, BLE controller functions of the processor 501 may cause the communication interface 503 to perform the scan by switching to the designated advertising channels, and the BLE controller functions detects advertisement packets in these channels. Once the BLE controller functions identify an advertisement packet within the received BLE communication signal, the BLE controller may convert the BLE communication signal into digital data which may be referred to as a raw advertisement packet. BLE host functions of the processor 501 may decode the advertisement packet and obtain information within the advertisement packet. In some examples, the BLE host functions may generate an advertisement report representative of information provided with the advertisement packet and possibly further advertisement packets.

Accordingly, the processor 501 may identify the presence of the secondary device sending the advertisement packets. From now on, based on paired device information stored in the memory 502 representing secondary devices that the communication device 500 may establish a connection with, or through an interaction of a user, or a received instruction, the processor 501 may establish connection with the detected secondary device. Illustratively, the processor 501 may encode a connection request for a transmission to the secondary device. The processor 501 may decode a connection response, received in response to the transmitted request, received from the secondary device, and the processor 501 may establish the link with the secondary device.

Illustratively, establishing the link may include that the processor 501 may, via BLE controller functions, perform a further scan based on scan parameters provided within the connection request. The BLE controller functions may identify a further advertisement packet received from the secondary device indicative that the secondary device is connectable. The BLE controller functions may send an AUX_CONNECT_REQ protocol data unit (PDU) to the secondary device, and the BLE controller functions may receive AUX_CONNECT_RES PDU from the secondary device. After exchange of these PDUs, the processor 501 may configure the link between the communication device 500 and the secondary device.

Traditionally, as indicated in this disclosure, the processor 501 may perform the discovery procedure in which the processor 501 is required to receive advertisement packets from both BLE devices of the BLE device pair, as both BLE devices of the BLE device pair may be secondary devices. Illustratively, the communication device 500 may receive an advertisement packet of the first BLE device of the BLE device pair within a scan window, but may not receive an advertisement packet of the second BLE device of the BLE device pair. In this scenario, the communication device may receive the advertisement packet of the second BLE device of the BLE device pair only in further scan windows, causing a delay for the BLE device pair to become operational.

In accordance with various aspects described herein, the processor 501 may identify an advertisement packet received from a first BLE device. The processor 501 may further check if the first BLE device is a BLE device of a BLE device pair. The processor 501 may determine a result indicating whether the first BLE device is a device of a BLE device pair based on the received advertisement packet. Illustratively, the received advertisement packet may indicate that the first BLE device is a device of the BLE device pair.

For example, the processor 501 may determine the result based on a type information provided in the advertisement packet. For example, the first BLE device may have sent the advertisement packet including a type of the first BLE device. For example, the secondary device may include a designated appearance value provided in the advertisement packet, which the designated appearance value indicate that the first BLE device is a BLE device of a BLE device pair. Illustratively, an earbud as the first BLE device may indicate with the designated value that the type of the first BLE device is an earbud within the advertisement packet. The processor 501 may decode the advertisement packet received from the first BLE device and determine whether the decoded advertisement packet include information representative of a type of a BLE device pair. For example, the memory 502 may store information indicating which appearance values are provided for BLE device pairs. The processor 501 may determine whether an appearance value provided in a received advertisement packet indicates a BLE device pair based on the information stored in the memory. Particularly, the processor 501 may determine for each received advertisement packet, whether the received advertisement packet includes an appearance value that indicates an earbud device.

For this purpose, the BLE host functions of the processor 501 may determine an advertisement report including information provided by at least the advertisement packet of the first BLE device and possibly further advertisement packets of further BLE devices within the environment. The BLE host functions may filter the advertisement report to identify a BLE device having a type information (e.g. appearance value) designated for a BLE device pair (e.g. an earbud device). The BLE host functions may identify the type information designated for a BLE device pair.

In response to an identified type information designated for a BLE device pair within the advertisement report, the BLE host functions may dynamically adjust the scan parameters associated with the BLE discovery procedure. Illustratively, when the BLE host functions identifies that there is a BLE device discovered of a BLE device pair within the advertisement report, the BLE host functions may increase the scanning duty cycle of the communication device 500. Illustratively, the BLE host functions may shorten the scan interval or extend the scan window. Illustratively, the BLE host functions may adjust the scan parameters from first scan parameters to second scan parameters that increase the scanning duty cycle.

In some examples, once the BLE host functions identify the second BLE device of the BLE device pair from an updated advertisement report and/or once connections are established with the first BLE device and the second BLE device, the BLE host functions may adjust back the scan parameter from the second scan parameter to the first scan parameters to restore default scan parameters.

In accordance with various aspects provided herein, the processor 501 may determine whether the first BLE device is a device of a BLE device pair at the BLE controller layer. For this purpose, the processor 501 may, via the BLE controller functions, store mapping information about scanned BLE devices during the scanning process into the memory 502. The BLE controller functions may maintain the mapping information providing a mapping between a type designated for BLE devices, of which their advertisement packets have been received by the BLE controller, and an identifier associated with the BLE device, such as addresses (BD_ADDR) of the BLE devices. The type information in the mapping may be based on previously obtained advertisement reports by BLE host functions and/or based on an interaction at the application layer (e.g. by a user indicating devices as a BLE device pair). In various examples, the stored mapping information may further include universally unique identifiers of previously discovered BLE devices.

It is to be noted that through maintained information described above by BLE controller functions of the processor 501, the BLE controller functions may optimize scanning parameters as described herein without depending on host parameters and/or decoding actual information provided within the advertisement packets for this operation.

Accordingly, the BLE controller functions of the processor 501 may determine whether a received advertisement packet includes an information that is indicative of the sender BLE device being a BLE device of a BLE device pair based on the mapping information stored in the memory. Illustratively, for the advertisement packet of the first BLE device of the BLE device pair, the BLE controller functions may determine that the first BLE device is of the BLE device pair based on the mapping information. For example, the BLE controller functions may extract the device address from the received advertisement packet and determine whether the device address (BD_ADDR) is an address of a BLE device of a BLE device pair from the mapping information. The BLE controller functions may filter the mapping information to identify if the BLE device having the received device address from the advertisement packet has a type information (e.g. appearance value) designated for a BLE device pair (e.g. an earbud device).

In some examples, the BLE controller functions may determine if the first BLE device is a LE Audio Device based on the mapping information including the UUID associated with the identified device address. That may further indicate that type of the first BLE device may be a BLE device of a BLE device pair.

In response to an identified type information designated for a BLE device pair based on the mapping information, the BLE controller functions may dynamically adjust the scan parameters associated with the BLE discovery procedure, or cause the BLE controller to perform the scan with new scan parameters. Illustratively, when the BLE controller functions identifies that there is a BLE device of a BLE device pair indicated by the device address, the BLE controller functions may increase the scanning duty cycle of the communication device 500. Illustratively, the BLE controller functions may shorten the scan interval or extend the scan window. Illustratively, the BLE controller functions may adjust the scan parameters from first scan parameters to second scan parameters that increase the scanning duty cycle.

In some examples, once the BLE controller functions identify the second BLE device of the BLE device pair from a further received advertisement packet and/or once connections are established with the first BLE device and the second BLE device, the BLE controller functions may adjust back the scan parameter from the second scan parameter to the first scan parameters to restore default scan parameters.

Through operations described herein, the BLE controller functions may accordingly keep monitoring appearance type of devices and may keep bucketizing advertisement reports in a chronological order. Further, the BLE controller functions may remove oldest reports based on memory availability, and if the advertisement report is from a BLE device pair, the BLE controller functions may prioritize bucketing for these particular reports. The prioritization may be according to corresponding UUIDs.

In various examples, when the BLE host functions establishes a connection with the first BLE device of a BLE device pair, the BLE controller may, in response to establishment of the connection with the first BLE device, increase the duty cycle for a designated duration to speed up discovery of the second BLE device.

In some examples, if there is already an advertisement report from the second BLE device of the BLE device pair of the same manufacturer in the scanning, the BLE controller functions may resend the report to BLE host functions to get into connection state with the second BLE device.

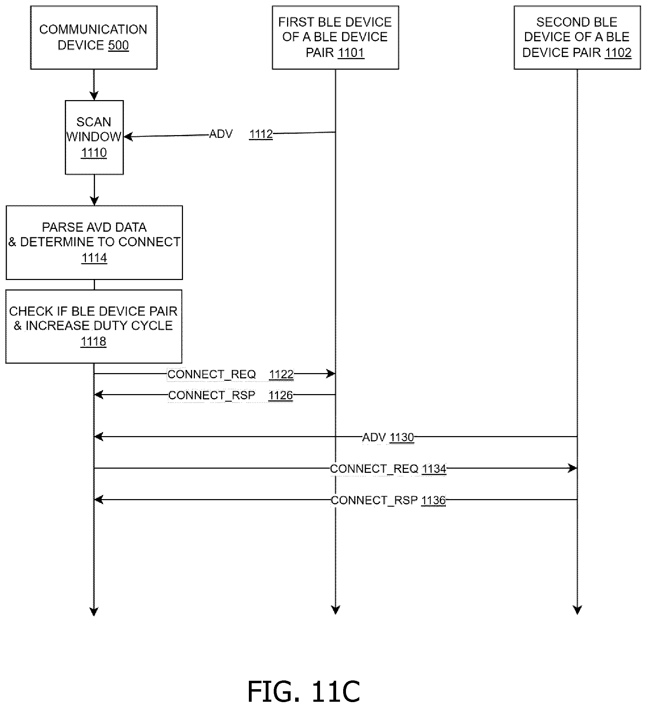

FIG. 11C shows an illustrative example including a messaging flow between the communication device 500 and the devices of the BLE device pair, illustratively, the first BLE device of the BLE device pair 1101 and the second BLE device of the BLE device pair.

Initially, the communication device 500 may initiate the discovery procedure and perform a scan within a scan window 1110 in which the communication device 500 may receive an advertisement packet 1112 of the first BLE device 1101. Illustratively, the advertisement packet 1112 may include information representing a BT address, a service UUID, a name, and a manufacturer. The communication device 500 may parse 1114 information within the received advertisement packets during the scan window 1110 and the processor 501 may determine whether to establish a connection with the first BLE device 1101.

The processor 501 may check 1118 if the first BLE device 1101 is a BLE device of a BLE device pair. For this, the processor 501 may determine whether the first BLE device 1101 is a type of a BLE device pair using UUID and service ID within the advertisement packet. The processor 501 may further store AVD data of the first BLE device 1101 and adjust scan parameters to increase the duty cycle.

The processor 501 may encode a connection request 1122, and the communication device 500 may receive a connection response 1126. As indicated above, with the increased duty cycle, the communication device 500 may receive the advertisement packet 1130 of the second BLE device. Accordingly, the processor 501 may encode a connection request 1134 and the communication device 500 may receive a connection response 1136.

FIG. 12 shows an illustrative example of a software flow that the processor 501 may perform. In 1201, the processor 501 may initiate a scanning using first scan parameters to receive advertisement packets from secondary devices within the radio environment. In 1202, the processor 501 may apply the advertisement packet filter as described above based on at least one of UUID, service ID, and/or BD_ADDR within the received advertisement packet. In 1203, the processor 501 may determine if there are multiple advertisement packets received from different BLE devices. If there are multiple advertisement packets received from different BLE devices, the processor 501 may check 1204 if there is a preconfigured priority for a designated UUID, and/or priority for UUIDS. In 1205, the processor 501 may accept a connection based on UUID priorities.

Further, in 1213, the processor 501 may determine if an advertisement packet of a first BLE device of a BLE device pair has been received. If the processor 501 identifies an advertisement packet of the first BLE device of a BLE device pair, in 1214, the processor may save the configuration of the first BLE device into the memory, illustratively the service UUID, manufacturer information, and device name provided with the advertisement packet. In 1215 the processor 501 may modify the scan parameter to increase the duty cycle. Illustratively, the modification of the scan parameters may further include modification of at least one of the scan modes, the scan duration, the scan interval, the scan window, and/or the filter policy to scan only for particular UUIDs. In 1216, the processor 501 may enable faster connection to the second BLE device of the BLE device pair and in 1217, the processor 501 may restore the first scan parameters.

In accordance with various aspects provided herein, in particular through aspects described involving the mapping information stored in the memory and BLE controller functions of the processor 501, a test arrangement has been prepared in a scenario in which the case of a BLE device pair including a left earbud and a right earbud, 3 iterations have been performed, which each iteration includes, resulting the performance indicated in the table, noting that the numbers provided in the table are experimental and may vary:
Put the earbuds in discoverable mode
Do Music Streaming from a streaming software
Pair and connect both the earbuds
Disconnect and remove the earbuds
Stop the streaming software traffic
Restart the communication device 500.

| Iterations | **With change** | | **Without change** | |
|---|---|---|---|---|
| | **Left Earbud** | **Right Earbud** | **Left Earbud** | **Right Earbud** |
| Iteration 1 | 19.87 sec | 20.064 sec | 23.91 sec | 21.60 sec |
| Iteration 2 | 19.13 sec | 19.19 sec | 21.06 sec | 19.82 sec |
| Iteration 3 | 19.31 sec | 19.84 sec | 22.63 sec | 20.86 sec |

The table above captures the overall time for end user to start using the earbuds for first time pairing. The time gap between the left and right ear buds' connection is reduced from 2 sec to the order for few milliseconds in the optimization. Eventually the overall average time for connection is optimized by 10%. This improvement will be more significant when it is reconnection scenarios. In reconnection the improvement is assessed to be 60% as the Link authentication is not required and profiles enumeration is faster.

In accordance with the problem associated with the discovery procedure of the BLE requires an alignment of scan windows at the primary device with the transmission of advertisement packets at the secondary devices, it may be desirable to configure secondary devices to align their advertisement packets with estimate scan windows of the primary device.

Aspects in this context are to be described by referring to the communication device 500 described in accordance with FIG. 5. It is to be noted that, although aspects described in this context may be combined and co-exist with further aspects provided in this disclosure, examples provided herein may also be implemented in a communication device only for the aspects described in this context.

In accordance with various aspects provided herein, the communication device 500 may be a BLE communication device. Accordingly, the processor 501 may perform BLE functions, including BLE host functions and BLE controller functions to communicate through the communication interface 503. The communication interface 503 may be configured to communicate via BLE communication signals. Aspects may be described herein for a scenario in which the communication device 500 is a secondary device (i.e. a peripheral device) within the context of BLE communication.

In accordance with various aspects provided herein, the processor 501 may align advertising anchor points of the communication device 500 in accordance with the anchor points utilized in a previously established connection. In some examples, the alignment may be based on the primary device (i.e. central device) to which the advertisement packets are sent.

In BLE communication, the term anchor points may refer to designated time instances with a connection interval. Illustratively, the communication device 500 and a primary device may communicate with each other in connection intervals by sending and/or receiving BLE communication signals that are aligned with an interval having a connection start and a connection end in time domain. Illustratively, the connection interval may represent the period of time (i.e. duration) between consecutive communication events between the communication device 500 and the primary device via an established BLE link. In BLE communication, the connection interval may vary between 7.5ms and 4000ms. A designated communication interval may include multiple time slots. Accordingly, the beginning and the end of a connection interval may correspond to two anchor points for the corresponding connection. One anchor point may indicate the beginning of a connection interval and another one anchor point may indicate the end of the connection interval.

Illustratively, when the communication device 500 communicate via an established BLE link with a primary device, the communication device 500 may align advertising anchor points marking the beginning and end of the advertisement window of the communication device with the last connection anchor points of the established BLE link. Accordingly, with respect to the primary device, which is not connected to the communication device 500 during the advertisement window, the communication device 500 may start advertising at the anchor points that map to the last connection interval via the previously established BT link with the primary device. This may allow the primary device to scan at the time slots which the connection anchor points apply. In some examples, a primary device described in this disclosure may also be configured to perform scanning according to last connection anchor points of the last established BT link.

Through the above-mentioned operation, the communication device 500 may send start its advertisement window more deterministically in cases of an immediate reconnection. If the advertisement packets are following the previous connection anchor points of the last connection interval and timing of the scanner device, the communication device 500 may keep advertising window aligned to the timing of the last connection anchor points, and thereby increase the chance of landing an advertisement packet within a scan window of the primary device, in particular in cases of immediate reconnections.

For this purpose, the processor 501 may identify one or more anchor points of an established BLE connection with a primary device, and monitor the anchor points of the established BLE connections. The processor 501 may store the identified anchor points in the memory 502. When the communication device 500 disconnects from the established BLE connection and when the communication device 500 starts sending advertisement packets to establish a further BLE connection, the processor 501 may send advertisement packets with a timing that is based on the one or more connection anchor points stored in the memory 502.

In some examples, the processor 501 may estimate a scanning interval of the primary device based on the stored connection anchor points to send advertisement packets within a scanning window of the primary device. In particular, the processor 501 may store the connection anchor points in a non-volatile memory. It is however to be noted that the size of the memory that is configured to store information representing the one or more connection anchor points of the previously established BT link may be small. In particular, the stored information may include only the last connection anchor points of the established BT link.

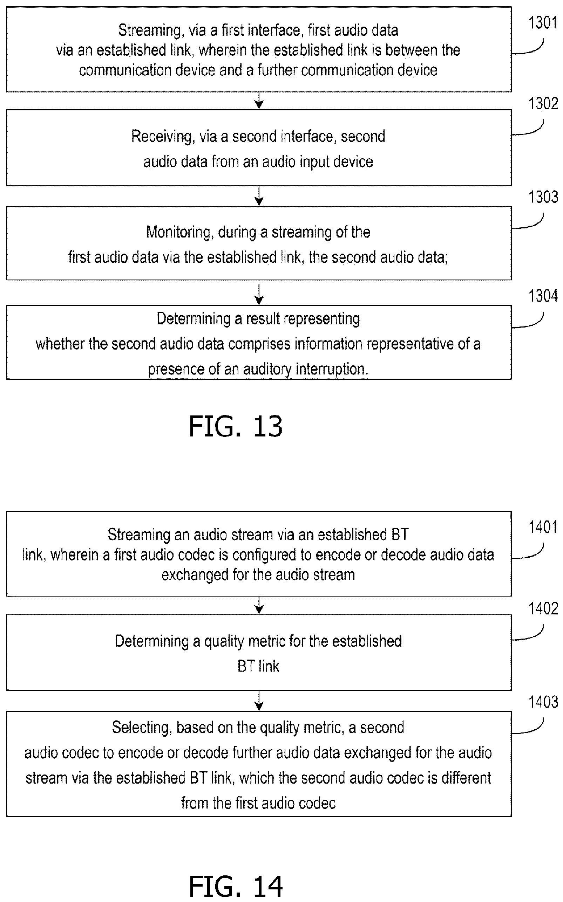

FIG. 13 shows an example of a method. The method may include streaming 1301, via a first interface, first audio data via an established link, wherein the established link is between the communication device and a further communication device; receiving 1302, via a second interface, second audio data from an audio input device; monitoring 1303, during a streaming of the first audio data via the established link, the second audio data; and determining 1304 a result representing whether the second audio data comprises information representative of a presence of an auditory interruption.

FIG. 14 shows an example of a method. The method may include streaming 1401 an audio stream via an established BT link, wherein a first audio codec is configured to encode or decode audio data exchanged for the audio stream; determining 1402 a quality metric for the established BT link; selecting 1403, based on the quality metric, a second audio codec to encode or decode further audio data exchanged for the audio stream via the established BT link, which the second audio codec is different from the first audio codec.

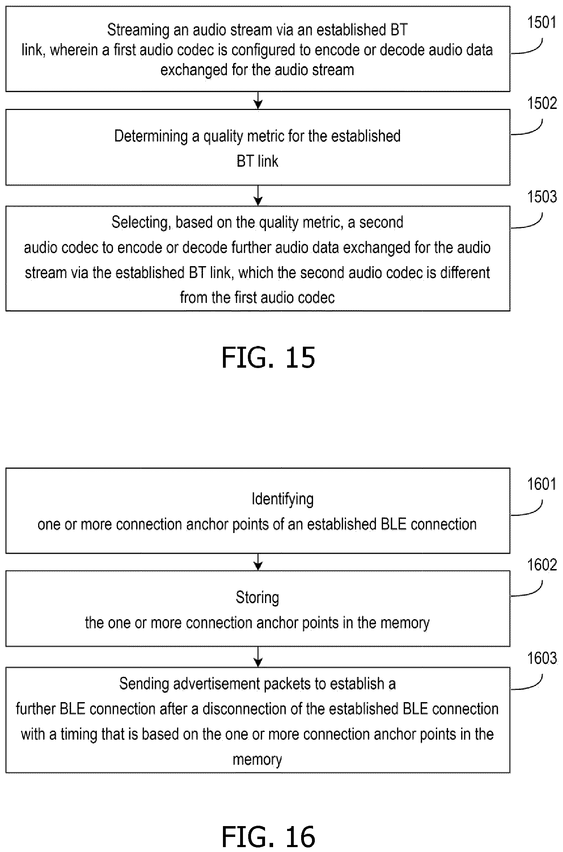

FIG. 15 shows an example of a method. The method may include identifying 1501 an advertisement packet received from a first BLE device; determining 1502 a result representative of whether the first BLE device is a device of a BLE device pair comprising the first BLE device and a second BLE device based on a type of the first BLE device; adjusting 1503 a scanning duty cycle of the BLE device based on the result.

FIG. 16 shows an example of a method. The method may include identifying 1601 one or more connection anchor points of an established BLE connection; storing 1602 the one or more connection anchor points in the memory; sending 1603 advertisement packets to establish a further BLE connection after a disconnection of the established BLE connection with a timing that is based on the one or more connection anchor points in the memory.

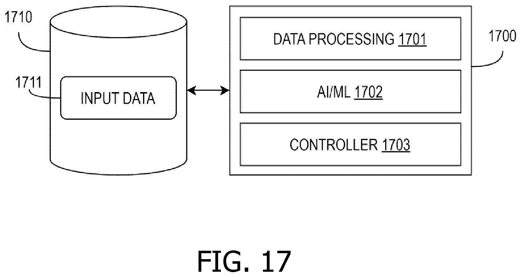

FIG. 17 shows schematically an example of a processor and a memory to implement an AI/ML in accordance with various aspects provided herein. The processor 1700 is depicted to include various functional units that are configured to provide various functions as disclosed herein, associated with the processor 501. The skilled person would recognize that the depicted functional units are provided to explain various operations that the processor 1700 may be configured to perform. Similarly, the memory 1710 (e.g. the memory 502) is depicted to include the input data 1711 as a block, however, the memory 1710 may store the input data 1711 in any kind of suitable configuration or mechanism.

Furthermore, the AI/ML unit 1702 is depicted as it is implemented in the processor 1700 only as an example, and any type of AI/ML implementation which may include the implementation of the AI/ML in an external processor, such as an accelerator, a graphics processing unit (GPU), a neuromorphic chip, or in a cloud computing device, or in an external processing device may also be possible according to any methods.

The processor 1700 may include a data processing unit 1701 that is configured to process data and obtain input of the AI/ML unit based on the input data 1711 as provided in various examples in this disclosure to be stored in the memory 1710. In various examples, the input data 1711 may include data of not only current but also past information for at least within a period of time in a plurality of instances of time (e.g. as a time-series data).

The data processing unit 1701 may implement various preprocessing operations to obtain the input. Such operations may include cleaning the input data 1711 by removing outliers, handling of missing parameters, correcting errors or inconsistencies, and such. Operations may further include data normalizations in order to scale the input data 1711 to a common range. Operations may further include data transformation including mapping the input data 1711 based on predefined mapping operations corresponding to mathematical functions to map one or more data items of the input data 1711 to a mapped data time for the purpose of analysis.

The data processing unit 1701 may be configured to generate training dataset based on the input data 1711. In other words, based output of the AI/ML unit 1702 in response to the input of the AI/ML, the data processing unit 1701 may prepare the training data to be used in the training of the AI/ML The data processing unit 1701 may be configured to apply data fusion techniques to aggregate data. Data fusion may be considered as a process of integrating and combining data, within this context, by combining the input data 1711 to obtain a unified dataset.

The data processing unit 1701 may further implement feature extraction operations. It is to be considered that the AI/ML implemented by the AI/ML unit may have certain constraints, some of which may relate to the structure and aspects of the data to be inputted to the AI/ML. The feature extraction operations may include translating (i.e. transforming) the input data 1711 into input of the AI/ML. The feature extraction operations may further include generation of training input data for the training dataset based on the input data 1711. In some aspects, the feature extraction operations may be based on model information representing the attributes to be used as the input of the AI/ML, relative importance or weights of the attributes, etc. The feature extraction operations may include reducing the number of attributes (i.e. data items from the input data 1711) to be used, ranking of the attributes, etc. based on the model information.

In some aspects, the input data 1711 may include information representative of annotations and/or labels to be used for training. In some aspects, the data processing unit 1701 may also assign labels or assign ground truth values for the generated training data for the generation of the training dataset. In some aspects, the data processing unit 1701 may further generate annotations for the generation of the training data set. Generation of annotations and/or labels may be according to supervised training inputs, or may be based on unsupervised methods, exemplarily by an implementation of an automatized model to assign the labels and/or the annotations.

For supervised learning, generation of labels and annotations may require domain expertise and an understanding of the specific tasks that the AI/ML is designed to address. For example, a human expert might need to review network logs and performance data to identify contributions to communication resource efficiency, which could then be labeled as positive or negative examples for a congestion prediction model. In some cases, semi-supervised or unsupervised learning techniques can be used to reduce the reliance on labeled data. These approaches may involve clustering, anomaly detection, or other methods that can identify patterns and relationships in the data without explicit ground truth labels.

Accordingly, the data processing unit 1701 may generate the training dataset based on the input data 1711. It is to be noted that the AI/ML unit 1702 may use the training dataset in predefined portions, namely a first portion of the training data set for training, a second portion of the training dataset for validation and a third portion of the training dataset for testing purposes. The AI/ML unit 1702 may use the first portion to train the AI/ML, which may allow the AI/ML to learn the underlying patterns and relationships in the data. The AI/ML unit 1702 may use the second portion to evaluate and fine-tune the AI/ML during the training process, which may help to prevent overfitting and improve generalization. Finally, the AI/ML unit 1702 may use the third portion to assess the performance of the trained AI/ML and provide an unbiased estimate of their accuracy and effectiveness for AI/ML tasks.

The AI/ML unit 1702 may implement one or more AI/MLs. The aspects are provided for one AI/ML but it may also include applications involving more than one AI/MLs. The AI/ML may be configured to receive the input with certain constraints, features, and formats. Accordingly, the data processing unit 1701 may obtain the input of the AI/ML, that is based on the input data 1711, to be provided to the AI/ML to obtain an output of the AI/ML. In various examples, the data processing unit 1701 may provide input data including the input data 1711 to the AI/ML. The input of the AI/ML may include attributes of the input data 1711 associated with a period of time or a plurality of consecutive periods of time. In various examples, the data processing unit 1701 may convert the input data 1711 to an input format suitable for the AI/ML (i.e. feature extraction e.g. to input feature vectors) so that the AI/ML may process the input data 1711. It is to be noted that the input of the AI/ML may naturally include data, though the term input of the AI/ML has been used to distinguish from the term "input data".

The processor 1700 may further include a controller 1703 to control the AI/ML unit 1702. The controller 1703 may provide the input to the AI/ML, or provide the AI/ML unit 1702 instructions to obtain the output. The controller 1703 may further be configured to perform further operations of the processor 1700 in accordance with various aspects of this disclosure.

The AI/ML may be any type of machine learning model configured to receive the input of the AI/ML and provide an output as provided in this disclosure. The AI/ML may stand for the ML-based application provided in the disclosure. The AI/ML may include any type of machine learning model suitable for the purpose. The AI/ML may include a decision tree model or a rule-based model suitable for various aspects provided herein. The AI/ML may include a neural network. The neural network may be any type of artificial neural network. The neural network may include any number of layers, including an input layer to receive the input of the AI/ML, an output layer to provide the output data. A number of layers may be provided between the input layer and the output layer (e.g. hidden layers). The training of the neural network (e.g., adapting the layers of the neural network, adjusting Model parameters) may use or may be based on any kind of training principle, such as backpropagation (e.g., using the backpropagation algorithm).

For example, the neural network may be a feed-forward neural network in which the information is transferred from lower layers of the neural network close to the input to higher layers of the neural network close to the output. Each layer may include neurons that receive input from a previous layer and provide an output to a next layer based on certain AI/ML (e.g. weights) parameters adjusting the input information.

The AI/ML may include a recurrent neural network in which neurons transfer the information in a configuration in which the neurons may transfer the input information to a neuron of the same layer. Recurrent neural networks (RNNs) may help to identify patterns between a plurality of input sequences, and accordingly, RNNs may be used to identify, in particular, a temporal pattern provided with time-series data and perform estimations based on the identified temporal patterns. In various examples of RNNs, long short-term memory (LSTM) architecture may be implemented. The LSTM networks may be helpful to perform classifications, processing, and estimations using time series data.

An LSTM network may include a network of LSTM cells that may process the attributes provided for an instance of time as input of the AI/ML, such as attributes provided for the instance of time, and one or more previous outputs of the LSTM that have taken in place in previous instances of time, and accordingly, obtain the output data. The number of the one or more previous inputs may be defined by a window size, and the weights associated with each previous input may be configured separately. The window size may be arranged according to the processing, memory, and time constraints and the input of the AI/ML. The LSTM network may process the features of the received raw data and determine a label for an attribute for each instance of time according to the features. The output data may include or represent a label associated with the input of the AI/ML.

In various examples, the neural network may be configured in top-down configuration in which a neuron of a layer provides output to a neuron of a lower layer, which may help to discriminate certain features of an input.

In accordance with various aspects, the AI/ML may include a reinforcement learning model. The reinforcement learning model may be modeled as a Markov decision process (MDP). The MDP may determine an action from an action set based on a previous observation which may be referred to as a state. In a next state, the MDP may determine a reward based on the current state that may be based on current observations and the previous observations associated with previous state. The determined action may influence the probability of the MDP to move into the next state. Accordingly, the MDP may obtain a function that maps the current state to an action to be determined with the purpose of maximizing the rewards. Accordingly, input of the AI/ML for a reinforcement learning model may include information representing a state, and an output data may include information representing an action.

Reinforcement learning (RL) is a type of machine learning that focuses on training an agent to make decisions by interacting with an environment. The agent learns to perform actions to achieve a goal by receiving feedback in the form of rewards or penalties. As a machine learning model, reinforcement learning models learn from data (in this case, the agent's experiences and interactions with the environment) to adapt their behavior and improve their performance over time. Since machine learning is a subset of AI, reinforcement learning models are also considered AI models, as they aim to perform tasks that require human-like decision-making capabilities.

The AI/ML may include a convolutional neural network (CNN), which is an example for feed-forward neural networks that may be used for the purpose of this disclosure, in which one or more of the hidden layers of the neural network include one or more convolutional layers that perform convolutions for their received input from a lower layer. The CNNs may be helpful for pattern recognition and classification operations. The CNN may further include pooling layers, fully connected layers, and normalization layers.

The AI/ML may include a generative neural network. The generative neural network may process input of the AI/ML in order to generate new sets, hence the output data may include new sets of data according to the purpose of the AI/ML. In various examples, the AI/ML may include a generative adversarial network (GAN) model in which a discrimination function is included with the generation function, and while the generation function may generate the data according to model parameters of the generation function and the input of the AI/ML, the discrimination function may distinguish the data generated by the generation function in terms of data distribution according to model parameters of the discrimination function. In accordance with various aspects of this disclosure, a GAN may include a deconvolutional neural network for the generation function and a CNN for the discrimination function. The AI/ML may include a trained AI/ML that is configured to provide the output as provided in various examples in this disclosure based on the input of the AI/ML and one or more Model parameters obtained by the training. The trained AI/ML may be obtained via an online and/or offline training. A training agent may perform various operations with respect to the training at various aspects, including online training, offline training, and optimizations based on the inference results. The AI/ML may take any suitable form or utilize any suitable technique for training process. For example, the AI/ML may be trained using supervised learning, semi-supervised learning, unsupervised learning, or reinforcement learning techniques.

In supervised learning, the AI/ML may be obtained using a training dataset including both inputs and corresponding desired outputs (illustratively, input data may be associated with a desired or expected output for that input data). Each training instance may include one or more input data item and a desired output. The training agent may train the AI/ML based on iterations through training instances and using an objective function to teach the AI/ML to estimate the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training dataset including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive feedback (also referred to as reward) or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

The training agent may adjust the Model parameters of the respective model based on outputs and inputs (i.e. output data and input data). The training agent may train the AI/ML according to the desired outcome. The training agent may provide the training data to the AI/ML to train the AI/ML. In various examples, the processor and/or the AI/ML unit itself may include the training agent, or another entity that may be communicatively coupled to the processor may include the training agent and provide the training data to the device, so that the processor may train the AI/ML.

In various examples, the device may include the AI/ML in a configuration that it is already trained (e.g. the Model parameters in a memory are already set for the purpose). It may be desirable for the AI/ML itself to have the training agent, or a portion of the training agent, in order to perform optimizations according to the output of inferences as provided in this disclosure. The AI/ML may include an execution unit and a training unit that may implement the training agent as provided in this disclosure for other examples. In accordance with various examples, the training agent may train the AI/ML based on a simulated environment that is controlled by the training agent according to similar considerations and constraints of the deployment environment.

The skilled person would immediately recognize that the exemplary AI/ML disclosed herein is explained that may have many configurations. In a least complex scenario, for execution of the AI/ML (i.e. inference), the AI/ML may be configured to provide an output including a predicted network usage pattern of the communication device 1100. For training of the AI/ML, the training agent may train the AI/ML by providing training input data of the generated training dataset to the input of the AI/ML and it may adjust model parameters of the AI/ML based on the output of the AI/ML that is mapped according to the training input data, and training output data of the training dataset (e.g. labels, annotations) associated with the provided training input data with an intention to make the output of the AI/ML more accurate. Accordingly, the training agent may adjust one or more model parameters based on a calculation including parameters for the output of the AI/ML for the training input data and the training output data associated with the training input data. In various examples, the calculation may also include one or more parameters of the AI/ML. With each iteration with respect to the training input data that may include many data items, which each data item may represent an input of an instance (of time, of observation, etc.) on various aspects and each iteration may iterate a respective data item representing an input of an instance, the training agent may accordingly cause the AI/ML to provide more accurate output through adjustments made in the model parameters.

The processor 1700 may implement the training agent, or another entity that may be communicatively coupled to the processor 1700 may include the training agent and provide the training input data to the device, so that the processor 1700 may train the AI/ML. The training agent may be part of the AI/ML unit 1702 described herein. Furthermore, the controller 1703 may control the AI/ML unit 1702 according to a predefined event. For example, the controller 1703 may provide instructions to the AI/ML unit 1702 to perform the inference and/or training in response to a received request from another entity. The controller 1703 may further obtain output of the AI/ML from the AI/ML unit 1702.

The following examples pertain to further aspects of this disclosure.

In example 1A, the subject matter includes an apparatus of a communication device, the apparatus may include: a first interface configured to stream first audio data via an established link, wherein the established link is between the communication device and a further communication device; a second interface configured to receive second audio data from an audio input device; a processor configured to: monitor, during a streaming of the first audio data via the established link, the second audio data; determine a result representing whether the second audio data includes information representative of a presence of an auditory interruption.

In example 2A, the subject matter of example 1A, wherein the processor is further configured to encode the information representative of the presence of the auditory interruption to stream via the established link based on the determined result.

In example 3A, the subject matter of example 1A or example 2A, wherein the processor is further configured to mute or decrease a volume of a streamed audio transmitted via the established link based on the determined result.

In example 4A, the subject matter of any one of examples 1A to 3A, wherein the processor is further configured to disconnect the established link based on the determined result.

In example 5A, the subject matter of any one of examples 1A to 4A, wherein the processor is further configured to stop a monitoring of the second audio data based on the determined result.

In example 6A, the subject matter of any one of examples 1A to 5A, wherein the processor is further configured to determine a presence of at least one of an emergency alarm sound; a doorbell ring sound; a phone ring sound; a baby crying sound; a weather-related sound; or one or more predefined words within the second audio data.

In example 7A, the subject matter of any one of examples 1A to 6A, wherein the processor is further configured to determine the presence of the auditory interruption based on stored information representative of one or more auditory interruptions; wherein the processor is further configured to compare the second audio data and the stored information representative of the one or more auditory interruptions.

In example 8A, the subject matter of any one of examples 1A to 7A, wherein the processor is further configured to determine whether the further communication device has a noise cancellation feature; wherein the processor is further configured to monitor the second audio data if the further communication device has the noise cancellation feature.

In example 9A, the subject matter of any one of examples 1A to 8A, wherein the processor is further configured to determine whether an application layer software streaming the audio is an augmented reality software; wherein the processor is further configured to monitor the audio data if the application layer software streaming the audio is the augmented reality software.

In example 10A, the subject matter of any one of examples 1 to 9, wherein the processor is further configured to monitor the audio data in a first configuration; wherein the processor is further configured operate in a second configuration in which the second interface and/or the audio input data is turned off.

In example 11A, the subject matter of example 10A, wherein the processor is further configured to determine whether to operate in the first configuration or the second configuration based on received application layer software information.

In example 12A, the subject matter of example 10A, or example 11A, wherein the processor is further configured to determine whether to operate in the first configuration or the second configuration based on a user interaction received from a user interface.

In example 13A, the subject matter of any one of examples 1 to 12A, wherein the processor is further configured to determine the result using a trained artificial intelligence and/or machine learning (AI/ML) model configured to receive input data may include the audio data and provide an output information representative of the presence of the auditory interruption based on AI/ML parameters.

In example 14A, the subject matter of example 13A, wherein the processor is further configured to optimize the AI/ML parameters based on the output information.

In example 15A, the subject matter of example 15A, wherein the processor is further configured to train the trained AI/ML model based on a user behaviour pattern.

In example 16A, the subject matter of any one of examples 1 to 15A, wherein the first interface includes a Bluetooth (BT) transceiver configured to communicate with the further communication device in accordance with a BT protocol.

In example 17A, the subject matter of any one of examples 1 to 16A, wherein the apparatus further includes the audio input device may include a microphone.

In example 18A, the subject matter of any one of examples 1 to 17A, wherein the apparatus further includes a communication interface configured to communicate with the audio input device that is external to the communication device.

In example 19A, the subject matter includes a method of a communication device, the method may include: streaming, via a first interface, first audio data via an established link, wherein the established link is between the communication device and a further communication device; receiving, via a second interface, second audio data from an audio input device; monitoring, during a streaming of the first audio data via the established link, the second audio data; determining a result representing whether the second audio data includes information representative of a presence of an auditory interruption.

In example 20A, the subject matter of example 19A, may further include encoding the information representative of the presence of the auditory interruption to stream via the established link based on the determined result.

In example 21A, the subject matter of example 19A or example 20A, may further include muting or decreasing a volume of a streamed audio transmitted via the established link based on the determined result.

In example 22A, the subject matter of any one of examples 19A to 21A, may further include disconnecting the established link based on the determined result.

In example 23A, the subject matter of any one of examples 19A to 22A, may further include stopping a monitoring of the second audio data based on the determined result.

In example 24A, the subject matter of any one of examples 19A to 23A, may further include determining a presence of at least one of an emergency alarm sound; a doorbell ring sound; a phone ring sound; a baby crying sound; a weather-related sound; or one or more predefined words within the second audio data.

In example 25A, the subject matter of any one of examples 19A to 24A, may further include determining the presence of the auditory interruption based on stored information representative of one or more auditory interruptions; comparing the second audio data and the stored information representative of the one or more auditory interruptions.

In example 26A, the subject matter of any one of examples 19A to 25A, may further include determining whether the further communication device has a noise cancellation feature; monitoring the second audio data if the further communication device has the noise cancellation feature.

In example 27A, the subject matter of any one of examples 19A to 26A, may further include determining whether an application layer software streaming the audio is an augmented reality software; monitoring the audio data if the application layer software streaming the audio is the augmented reality software.

In example 28A, the subject matter of any one of examples 19A to 27A, may further include monitoring the audio data in a first configuration; operating in a second configuration in which the second interface and/or the audio input data is turned off.

In example 29A, the subject matter of example 28A, may further include determining whether to operate in the first configuration or the second configuration based on received application layer software information.

In example 30A, the subject matter of example 28A, or example 29A, may further include determining whether to operate in the first configuration or the second configuration based on a user interaction received from a user interface.

In example 31A, the subject matter of any one of examples 19A to 30A, may further include determining the result using a trained artificial intelligence and/or machine learning (AI/ML) model configured to receive input data may include the audio data and provide an output information representative of the presence of the auditory interruption based on AI/ML parameters.

In example 32A, the subject matter of example 31A, may further include optimizing the AI/ML parameters based on the output information.

In example 33A, the subject matter of example 32A, may further include training the trained AI/ML model based on a user behaviour pattern.

In example 34A, the subject matter of any one of example 19A to 33A, wherein the first interface includes a Bluetooth (BT) transceiver configured to communicate with the further communication device in accordance with a BT protocol.

In example 35A, a non-transitory computer-readable medium comprising one or more instructions which, if executed by a processor, cause the processor to perform the subject matter of any one examples 19A to 34A.

In example 1B, the subject matter includes an apparatus of a Bluetooth (BT) communication device, the apparatus may include a processor configured to: stream an audio stream via an established BT link, wherein a first audio codec is configured to encode or decode audio data exchanged for the audio stream; determine a quality metric for the established BT link; select, based on the quality metric, a second audio codec to encode or decode further audio data exchanged for the audio stream via the established BT link, which the second audio codec is different from the first audio codec.

In example 2B, the subject matter of example 1B, wherein the processor is configured to determine a plurality of audio codecs; wherein the processor is configured to select the second audio codec from the plurality of audio codecs.

In example 3B, the subject matter of example 2B, wherein each audio codec of the plurality of audio codecs is associated with a respective data transfer rate; wherein the processor is configured to select the second audio codec based on data transfer rates of the plurality of codecs.

In example 4B, the subject matter of example 2B or 3B, wherein the processor is configured to determine the plurality of audio codecs based on information received from an application layer software.

In example 5B, the subject matter of any one of examples 2B to 4B, wherein the processor is configured to determine the plurality of audio codecs based on a monitoring of channel quality parameters of the established BT link.

In example 6B, the subject matter of any one of examples 2B to 5B, wherein the processor is configured to determine the plurality of audio codecs based on information received from a further BT communication device at another end of the established BT link.

In example 7B, the subject matter of any one of examples 1B to 6B, wherein the processor is further configured to determine the quality metric based on link state information may include at least one of an application layer software configured to generate or receive the audio; a battery status of the BT communication device or a further BT communication device of the established BT link; physical communication channel parameters for the established BT link; received signal strength indicators received from the further BT communication device; telemetry data associated to the further BT communication device; a distance determined between the BT communication device and the further BT communication device; and/or a presence and/or a number of interfering BT devices within the BT environment.

In example 8B, the subject matter of example 7B, wherein the processor is further configured to select the second audio codec using a trained artificial intelligence and/or machine learning (AI/ML) model configured to receive input data based on the link state information; wherein the AI/ML model is configured to provide output data representative of a selected audio codec.

In example 9B, the subject matter of any one of examples 1B to 8B, wherein the processor is further configured to negotiate changing an audio codec associated with the audio stream with a further BT communication device at another end of the established BT link.

In example 10B, the subject matter of any one of examples 1B to 9B, wherein the processor is further configured to change the audio codec from the first audio codec to the second audio codec for a seamless audio streaming.

In example 11B, the subject matter of any one of examples 1B to 10B, wherein the processor is further configured to determine a hysteresis period, wherein the processor is prevented to determine a further audio codec during the hysteresis period after the second audio codec is determined.

In example 12B, the subject matter of any one of examples 1B to 11B, wherein the processor is further configured to generate an audio indication within a streamed audio based on the quality metric.

In example 13B, the subject matter of example 12B, wherein the processor is further configured to determine a distance to a further BT communication device at another end of the established BT link; wherein the processor is further configured to generate the audio indication based on the distance.

In example 14B, the subject matter of example 13B, wherein the processor is further configured to monitor received signal strength indicators (RSSIs) of the further BT communication device; wherein the processor is further configured to determine the distance based on the RSSIs.

In example 15B, the subject matter of any one of examples 13B or 14B, wherein the processor is further configured to generate the audio indication based on the distance and a distance threshold.

In example 16B, the subject matter of any one of examples 12B to 15B, wherein the processor is further configured to implement a trained artificial intelligence and/or machine learning (AI/ML) model configured to receive input data based on link state information; wherein the AI/ML model is configured to provide a binary output data representative of whether to generate the audio indication.

In example 17B, the subject matter of any one of examples 1B to 16B, wherein the processor is further configured to determine a hysteresis period, wherein the processor is prevented to generate a further audio indication during the hysteresis period after a generation of the audio indication.

In example 18B, the subject matter of any one of examples 1B to 17B, may further include a BT transceiver configured to transmit and/or send BT communication signals.

In example 19B, the subject matter includes a method of a Bluetooth (BT) communication device, the method may include: streaming an audio stream via an established BT link, wherein a first audio codec is configured to encode or decode audio data exchanged for the audio stream; determining a quality metric for the established BT link; selecting, based on the quality metric, a second audio codec to encode or decode further audio data exchanged for the audio stream via the established BT link, which the second audio codec is different from the first audio codec.

In example 20B, the subject matter of example 19B, may further include determining a plurality of audio codecs; selecting the second audio codec from the plurality of audio codecs.

In example 21B, the subject matter of example 20B, wherein each audio codec of the plurality of audio codecs is associated with a respective data transfer rate; wherein the method further includes selecting the second audio codec based on data transfer rates of the plurality of codecs.

In example 22B, the subject matter of example 20B or 21B, may further include determining the plurality of audio codecs based on information received from an application layer software.

In example 23B, the subject matter of any one of examples 20B to 22B, may further include determining the plurality of audio codecs based on a monitoring of channel quality parameters of the established BT link.

In example 24B, the subject matter of any one of examples 20B to 23B, may further include determining the plurality of audio codecs based on information received from a further BT communication device at another end of the established BT link.

In example 25B, the subject matter of any one of examples 19B to 24B, may further include determining the quality metric based on link state information may include at least one of an application layer software configured to generate or receive the audio; a battery status of the BT communication device or a further BT communication device of the established BT link; physical communication channel parameters for the established BT link; received signal strength indicators received from the further BT communication device; telemetry data associated to the further BT communication device; a distance determined between the BT communication device and the further BT communication device; and/or a presence and/or a number of interfering BT devices within the BT environment.

In example 26B, the subject matter of example 25B, may further include selecting the second audio codec using a trained artificial intelligence and/or machine learning (AI/ML) model configured to receive input data based on the link state information; wherein the AI/ML model is configured to provide output data representative of a selected audio codec.

In example 27B, the subject matter of any one of examples 19B to 26B, may further include negotiating changing an audio codec associated with the audio stream with a further BT communication device at another end of the established BT link.

In example 28B, the subject matter of any one of examples 19B to 27B, may further include changing the audio codec from the first audio codec to the second audio codec for a seamless audio streaming.

In example 29B, the subject matter of any one of examples 19B to 28B, may further include determining a hysteresis period, wherein the processor is prevented to determine a further audio codec during the hysteresis period after the second audio codec is determined.

In example 30B, the subject matter of any one of examples 19B to 29B, may further include generating an audio indication within a streamed audio based on the quality metric.

In example 31B, the subject matter of example 30B, may further include determining a distance to a further BT communication device at another end of the established BT link; may further include generating the audio indication based on the distance.

In example 32B, the subject matter of example 31B, may further include monitoring received signal strength indicators (RSSIs) of the further BT communication device; may further include determining the distance based on the RSSIs.

In example 33B, the subject matter of any one of examples 31B or 32B, may further include generating the audio indication based on the distance and a distance threshold.

In example 34B, the subject matter of any one of examples 30B to 33B, may further include implementing a trained artificial intelligence and/or machine learning (AI/ML) model configured to receive input data based on link state information; wherein the AI/ML model is configured to provide a binary output data representative of whether to generate the audio indication.

In example 35B, the subject matter of any one of examples 19B to 34B, may further include determining a hysteresis period, wherein the processor is prevented to generate a further audio indication during the hysteresis period after a generation of the audio indication.

In example 36B, a non-transitory computer-readable medium including one or more instructions which, if executed by a processor, cause the processor to perform any one of the examples 19B to 34B.

In example 1C, the subject matter includes an apparatus of a Bluetooth Low Energy (BLE) device, the apparatus may include a processor configured to: identify an advertisement packet received from a first BLE device; determine a result representative of whether the first BLE device is a device of a BLE device pair may include the first BLE device and a second BLE device based on a type of the first BLE device; adjust a scanning duty cycle of the BLE device based on the result.

In example 2C, the subject matter of example 1C, wherein the processor is configured to increase the scanning duty cycle if the first BLE device is the device of the BLE device pair.

In example 3C, the subject matter of example 1C or example 2C, wherein the advertisement packet includes information representing the type of the first BLE device.

In example 4C, the subject matter of any one of examples 1C to 3C, wherein the information representing the type of the first BLE device includes an appearance field or a universal unique identifier (UUID) of the first BLE device.

In example 5C, the subject matter of any one of examples 1C to 4C, wherein the processor is configured to perform BT host functions; wherein the processor is configured to identify the first BLE device and the type of the first BLE device based on an advertisement report.

In example 6C, the subject matter of any one of examples 1C to 4C, wherein the processor is configured to perform BT controller functions; wherein the processor is configured to generate an advertisement report based on received advertisement packets, wherein the advertisement report is stored in a memory; wherein the processor is configured to identify the first BLE device and the type of the first BLE device based on the generated advertisement report.

In example 7C, the subject matter of example 6C, wherein the processor is configured to perform an advertisement filtering operation to identify the first BLE device based on a BT device type.

In example 8C, the subject matter of example 6C or example 7C, wherein the BT controller functions receives information from BT host functions, wherein the information is indicative of a connection establishment with the first BLE device; wherein the processor is configured to adjust the scanning duty cycle in response to the information.

In example 9C, the subject matter of any one of examples 1C to 8C, wherein the processor is configured to perform a search to identify advertised BLE devices having a BT device type from an obtained advertisement report.

In example 10C, the subject matter of any one of examples 1C to 9C, wherein the apparatus further includes a BLE transceiver configured to transmit and/or receive BLE signal.

In example 11C, the subject matter includes an apparatus of a BLE peripheral device, the apparatus may include a memory and a processor configured to: identify one or more connection anchor points of an established BLE connection; store the one or more connection anchor points in the memory; send advertisement packets to establish a further BLE connection after a disconnection of the established BLE connection with a timing that is based on the one or more connection anchor points in the memory.

In example 12C, the subject matter of example 11C, wherein the processor is configured to estimate a scanning interval of a central device based on the one or more connection anchor points stored in the memory; wherein the processor is configured to send the advertisement packets based on the estimated scanning interval.

In example 13C, the subject matter of example 11C or example 12C, wherein the processor is configured to send the advertisement packets based on further a last connection anchor point of the one or more communication anchor points stored in the memory.

In example 14C, the subject matter of any one of examples 11C to 13C, wherein the memory is a non-volatile memory.

In example 15C, the subject matter of any one of examples 11C to 14C, wherein anchor points for sending advertisement packets are aligned with the one or more connection anchor points stored in the memory.

In example 16C, the subject matter of any one of examples 11C to 15C, wherein the apparatus further includes a BLE transceiver configured to transmit and/or receive BLE signal.

In example 17C, the subject matter includes a method of a Bluetooth Low Energy (BLE) device, the method may include: identifying an advertisement packet received from a first BLE device; determining a result representative of whether the first BLE device is a device of a BLE device pair may include the first BLE device and a second BLE device based on a type of the first BLE device; adjusting a scanning duty cycle of the BLE device based on the result.

In example 18C, the subject matter of example 17C, may further include increasing the scanning duty cycle if the first BLE device is the device of the BLE device pair.

In example 19C, the subject matter of example 17C or example 18C, wherein the advertisement packet includes information representing the type of the first BLE device.

In example 20C, the subject matter of any one of examples 17C to 19C, wherein the information representing the type of the first BLE device includes an appearance field or a universal unique identifier (UUID) of the first BLE device.

In example 21C, the subject matter of any one of examples 17C to 20C, may further include performing BT host functions; identifying the first BLE device and the type of the first BLE device based on an advertisement report.

In example 22C, the subject matter of any one of examples 17C to 21C, may further include performing BT controller functions; generating an advertisement report based on received advertisement packets, wherein the advertisement report is stored in a memory; identifying the first BLE device and the type of the first BLE device based on the generated advertisement report.

In example 23C, the subject matter of example 22C, performing an advertisement filtering operation to identify the first BLE device based on a BT device type.

In example 24C, the subject matter of example 22C or example 23C, wherein the BT controller functions receives information from BT host functions, wherein the information is indicative of a connection establishment with the first BLE device; wherein the method further includes adjusting the scanning duty cycle in response to the information.

In example 25C, the subject matter of any one of examples 17C to 24C, may further include performing a search to identify advertised BLE devices having a BT device type from an obtained advertisement report.

In example 26C, the subject matter of any one of examples 17C to 25C, may further include transmitting and/or receiving BLE signal.

In example 27C, the subject matter includes a method of a BLE peripheral device, the method may include identifying one or more connection anchor points of an established BLE connection; storing the one or more connection anchor points in the memory; sending advertisement packets to establish a further BLE connection after a disconnection of the established BLE connection with a timing that is based on the one or more connection anchor points in the memory.

In example 28C, the subject matter of example 27C, may further include estimating a scanning interval of a central device based on the one or more connection anchor points stored in the memory; may further include sending the advertisement packets based on the estimated scanning interval.

In example 29C, the subject matter of example 27C or example 28C, may further include sending the advertisement packets based on further a last connection anchor point of the one or more communication anchor points stored in the memory.

In example 30C, the subject matter of any one of examples 27C to 29C, wherein anchor points for sending advertisement packets are aligned with the one or more connection anchor points stored in the memory.

In example 31C, a non-transitory computer-readable medium including one or more instructions which, if executed by a processor, cause the processor to perform the subject matter of any one of examples 17C to 30C.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered the same signal. For example, a transmit signal may be considered as referring to the transmit signal in baseband, intermediate, and radio frequencies.

Similarly, as used herein, data may be transmitted or conducted through a data chain in which the data is processed to change characteristics via encoding and/or decoding operations, arrangement of data packets (e.g. data packets in various layers of protocol stack), and so on. The data may be referred to as the same data even as such characteristics are adapted. In general, so long as a data continues to carry the same information, the data may be considered as the data signal. For example, audio data may be considered as referring to an audio signal, a pre-processed audio data obtained from the audio signal, encoded audio signal, or encoded pre-processed audio data, unless explicitly specified.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

All acronyms defined in the above description additionally hold in all claims included herein.

## Claims

1. An apparatus of a communication device, the apparatus comprising:
a first interface configured to stream first audio data via an established link, wherein the established link is connected to the communication device and a further communication device;
a second interface configured to receive second audio data from an audio input device; and
a processor configured to:
monitor, during a streaming of the first audio data via the established link, the second audio data; and
determine a result representing whether the second audio data comprises information representative of a presence of an auditory interruption.

2. The apparatus of claim 1,
wherein the processor is further configured to encode the information representative of the presence of the auditory interruption to stream via the established link based on the determined result.

3. The apparatus of any one of claims 1 or 2,
wherein the processor is further configured to mute or decrease a volume of a streamed audio transmitted via the established link based on the determined result.

4. The apparatus of any one of claims 1 to 3,
wherein the processor is further configured to determine a presence of at least one of an emergency alarm sound; a doorbell ring sound; a phone ring sound; a baby crying sound; a weather-related sound; or one or more predefined words within the second audio data.

5. The apparatus of any one of claims 1 to 4,
wherein the processor is further configured to determine the presence of the auditory interruption based on stored information representative of one or more auditory interruptions; and
wherein the processor is further configured to compare the second audio data and the stored information representative of the one or more auditory interruptions.

6. The apparatus of any one of claims 1 to 5,
wherein the processor is further configured to determine whether the further communication device has a noise cancellation feature; and
wherein the processor is further configured to monitor the second audio data if the further communication device has the noise cancellation feature.

7. The apparatus of any one of claims 1 to 6,
wherein the processor is further configured to determine the result using a trained artificial intelligence and/or machine learning (AI/ML) model configured to receive input data comprising the audio data and provide an output information representative of the presence of the auditory interruption based on AI/ML parameters.

8. The apparatus of any one of claims 1 to 7,
wherein the apparatus further comprises the audio input device comprising a microphone.

9. An apparatus of a Bluetooth (BT) communication device, the apparatus comprising a processor configured to:
stream an audio stream via an established BT link, wherein a first audio codec is configured to encode or decode audio data exchanged for the audio stream;
determine a quality metric for the established BT link; and
select, based on the quality metric, a second audio codec to encode or decode further audio data exchanged for the audio stream via the established BT link, which the second audio codec is different from the first audio codec.

10. The apparatus of claim 9,
wherein the processor is configured to determine a plurality of audio codecs; and
wherein the processor is configured to select the second audio codec from the plurality of audio codecs;

11. The apparatus of claim 10,
wherein the processor is configured to determine the plurality of audio codecs based on a monitoring of channel quality parameters of the established BT link.

12. The apparatus of any one of claims 9 to 11,
wherein the processor is further configured to determine the quality metric based on link state information comprising at least one of an application layer software configured to generate or receive the audio; a battery status of the BT communication device or a further BT communication device of the established BT link; physical communication channel parameters for the established BT link; received signal strength indicators received from the further BT communication device; telemetry data associated to the further BT communication device; a distance determined between the BT communication device and the further BT communication device; or a presence or a number of interfering BT devices within BT environment.

13. The apparatus of claim 12,
wherein the processor is further configured to select the second audio codec using a trained artificial intelligence and/or machine learning (AI/ML) model configured to receive input data based on the link state information; and
wherein the AI/ML model is configured to provide output data representative of a selected audio codec.

14. The apparatus of any one of claims 9 to 13,
wherein the processor is further configured to negotiate changing an audio codec associated with the audio stream with a further BT communication device at another end of the established BT link.
